# EUROPÄISCHE PATENTANMELDUNG

(11) **EP 4 141 759 A1**
(43) Veröffentlichungstag der Anmeldung: **01.03.2023**
(21) Anmeldenummer: 22192020.0
(22) Anmeldetag: 24.08.2022
(51) Int. Cl.: G06Q 10/06

(54) **VERFAHREN ZUR ÜBERWACHUNG EINES ARBEITSSYSTEMS SOWIE SYSTEM MIT ARBEITSSYSTEM**

(30) Priorität: 31.08.2021 DE 102021122485
(71) Anmelder: Workaround GmbH, 81379 München (DE)
(72) Erfinder: Nöllgen, Till, 81379 München (DE); Petruch, Sebastian, 81379 München (DE); Kirchner, Matthias, 81379 München (DE); Hutter, Johannes, 81379 München (DE)
(74) Vertreter: Flach Bauer & Partner Patentanwälte mbB

(57) **Zusammenfassung**

Ein Verfahren zur Überwachung eines Arbeitssystems (14) mit einer Vielzahl von Sensorvorrichtungen (24) und einem Leitsystem (20) ist gezeigt. Das Verfahren hat die folgenden Schritte:
- Erzeugen von Sensordaten (D) sowie von Ereignisdatenpaketen (E) durch die Sensorvorrichtungen (24) während der Benutzung durch einen Benutzer (W),
- Übermitteln der Ereignisdatenpakete (E) an ein Korrelationsmodul (52) eines Überwachungssystems (16),
- Empfangen von Kontextinformation (I) durch das Korrelationsmodul (52),
- Korrelieren der Ereignisdatenpakete (E) mit den Kontextinformationen (I) durch das Korrelationsmodul (52) und Erzeugen von Kontextdatensätzen (K) durch das Korrelationsmodul (52), die auf den mit den Kontextinformationen (I) korrelierten Ereignisdatenpaketen (E) basieren,
- Erstellen eines Berichtes (B) über den Zustand des Arbeitssystems (14) und/oder über Abweichungen vom bisherigen Betriebsablauf des Arbeitssystems (14) und/oder mit einer Systemverbesserung (C) durch ein Analysemodul (54) basierend auf den Kontextdatensätzen (K).

Ferner ist ein System (12) gezeigt.

## Beschreibung

Die Erfindung betrifft ein Verfahren zur Überwachung eines Arbeitssystems sowie ein System mit einem Arbeitssystem.

Arbeitssysteme, mittel denen komplexe Prozesse durchgeführt werden, sind bekannt. Hierbei werden üblicherweise einige Arbeitsschritte durch Maschinen durchgeführt und andere Arbeitsschritte durch Werker oder Benutzer.

Die Maschinen können dabei Industrieroboter sein oder aber von den Benutzern tragbare Geräte, wie Barcodeleser.

Die Benutzer können dabei durch tragbare Vorrichtungen, wie den Barcodelesern, angeleitet werden, damit sie den im komplexen Prozess zu diesem Zeitpunkt notwendigen Schritt korrekt ausführen.

Beispiele für solche Arbeitssysteme sind Montagelinien komplexer Produkte, wie Automobile, oder große Versandlager.

Die mit den Arbeitssystemen ausgeführten Prozesse sind aber üblicherweise am Reißbrett entworfen, ohne konkrete Rückmeldung aus der Praxis oder Hallen, in denen der Prozess umgesetzt wird.

Dadurch enthalten diese Prozesse meistens, obwohl sie in der Theorie sehr effizient sind, versteckte Ineffizienzen, die sich beispielsweise aus absichtlichen oder unabsichtlichen Prozessabweichungen der Benutzer oder auch den räumlichen Gegebenheit des Arbeitssystems bzw. einer Halle in der das Arbeitssystem verwendet wird, ergeben.

Außerdem kommen üblicherweise eine Vielzahl an Maschinen, von tragbaren Barcodescannern bis hin zu Industrieroboter zum Einsatz, wodurch zwar Daten gewonnen werden können, aber viele Datenströme gleichzeitig von verschiedenen Geräten und aus verschiedenen Prozessschritten vorhanden sind.

Hinzu kommt, dass EDV-Systeme der Verwender der Arbeitssysteme nur sehr schwierig anpassbar sind, da diese üblicherweise aufgrund der tiefen Integration in das jeweilige Unternehmen äußerst komplex sind.

Beispielsweise offenbart die US 7 243 001 B2 ein System zur Erstellung einer Karte eines Versandlagerhauses. Während des Betriebs sammeln Arbeiter, sog. "Picker", aus verschiedenen Regalen des Lagerhauses die zum Versand vorgesehenen Waren zusammen. Dabei wird die Position jedes Arbeiters zu verschiedenen Zeitpunkten aufgezeichnet und die Wege des Arbeiters anhand dessen ermittelt. Die ermittelten Wege werden anschließend dazu verwendet, eine Karte des Lagerhauses zu erstellen, Änderungen im Lagerhaus zu erkennen und Leistungen eines Arbeiters mit Leistungen anderer Arbeiter zu vergleichen. Die gesammelten Daten werden dabei jedoch nicht in einen größeren Kontext gesetzt, sondern das Verfahren beschränkt sich auf Vergleiche aktueller Messwerte mit historischen Messwerten.

Aus diesen Gründen sind solche Arbeitssysteme schwer zu überwachen und auf Effizienz zu prüfen. Außerdem können Probleme nicht zeitnah identifiziert werden.

Es ist daher Aufgabe der Erfindung, ein Verfahren zur Überwachung eines Arbeitssystems sowie ein System bereitzustellen, die eine Überwachung des Arbeitssystems sowie Effizienzsteigerungen des Arbeitssystems ermöglichen.

Die Aufgabe wird gelöst durch ein Verfahren zur Überwachung eines Arbeitssystems mit einer Vielzahl von Sensorvorrichtungen mit wenigstens einem Sensor und einem Leitsystem. Dabei weist das Verfahren die folgenden Schritte auf:
- Erzeugen von Sensordaten sowie von Ereignisdatenpaketen durch die Sensorvorrichtungen während der Benutzung durch einen Benutzer,
- Übermitteln der Ereignisdatenpakete an ein Korrelationsmodul eines Überwachungssystems,
- Empfangen von Kontextinformation durch das Korrelationsmodul,
- Korrelieren der Ereignisdatenpakete mit den Kontextinformationen durch das Korrelationsmodul und Erzeugen von Kontextdatensätzen durch das Korrelationsmodul, die auf den mit den Kontextinformationen korrelierten Ereignisdatenpaketen basieren,
- Übermitteln der Kontextdatensätze an ein Analysemodul, und
- Erstellen eines Berichtes über den Zustand des Arbeitssystems und/oder über Abweichungen und/oder mit einer Systemverbesserung vom bisherigen Betriebsablauf des Arbeitssystems durch das Analysemodul basierend auf den Kontextdatensätzen.

Durch die Erstellung des Berichtes über den Zustand des Arbeitssystems und/oder über Abweichungen vom bisherigen Betriebsablauf des Arbeitssystems und/oder des Berichts mit einer Systemverbesserung kann zum einen eine Überwachung des Arbeitssystems ähnlich dem einer Überwachung einer automatischen Industrieanlage ermöglicht werden, sodass auf kurzfristige auftretende Probleme schnell reagiert werden kann.

Auch können durch die Berücksichtigung von Abweichungen vom bisherigen Betriebsablauf Änderungen erkannt werden, die auf bisher versteckte Ineffizienten hindeuten, deren Behebung die Effizienz des Arbeitssystems steigert, und entsprechende Verbesserungsvorschläge ausgegeben werden.

Im Gegensatz zum Stand der Technik werden erfindungsgemäß also nicht nur aktuelle Messwerte mit Messwerten aus der Vergangenheit verglichen, sondern ein Kontext verwendet oder erzeugt, der als Kontextdatensatz verarbeitet werden kann. Insbesondere kann der Kontext mittels bedingter Wahrscheinlichkeiten ermittelt werden.

Zum Beispiel werden zur Erstellung des Berichtes Kontextdatensätze zu verschiedenen Sensorvorrichtungen verwendet, d.h. eine Vielzahl an Kontextdatensätzen, die auf Ereignisdatenpaketen basieren, die von verschiedenen Sensorvorrichtungen, insbesondere von Sensorvorrichtungen verschiedener Benutzer, verschiedenen Arbeitsstationen und/oder verschiedenen Tätigkeiten stammen.

Beispielsweise sind die Sensorvorrichtungen tragbar, insbesondere Wearables, d.h. wie am Körper oder an Kleidungsstücken getragene Geräte.

Insbesondere werden die Sensordaten gleichzeitig mit den Ereignisdatenpaketen an das Leitsystem bzw. das Überwachungssystem übermittelt.

Der Kontextdatensatz kann beispielsweise als umfassende Beschreibung eines Moments oder Abschnitts der vom Benutzer mit dem Arbeitssystem durchgeführten Tätigkeit, insbesondere den ausgeführten Prozess angesehen werden.

In eine Ausführungsform steuert das Leitsystem die Sensorvorrichtungen zumindest teilweise zur Durchführung eines der jeweiligen Sensorvorrichtung zugewiesenen Prozesses, insbesondere wobei die zugewiesenen Prozesse für verschiedene Sensorvorrichtungen unterschiedlich sein können. Auf diese Weise kann der Benutzer W besonders effektiv geführt werden.

Beispielsweise ist der wenigstens eine Sensor der Sensorvorrichtungen eine Kamera, ein Barcodeleser und/oder ein Beschleunigungssensor, um Gegenstände, wie Bauteile oder Waren, Orte oder Personen einfach identifizieren zu können.

Ein Barcode kann beispielsweise ein Strichcode, ein QR-Code, ein Data-Matrix-Code oder dergleichen sein.

Zur einfachen Betätigung des Sensors oder anderer Komponenten der Sensorvorrichtung kann die Sensorvorrichtungen wenigstens ein Betätigungselement, insbesondere einen Taster und/oder einen Auslöser aufweisen.

Um den Benutzer zielgerichtet führen zu können, kann die Sensorvorrichtung wenigstens ein Ausgabemittel aufweisen, insbesondere einen Bildschirm, eine oder mehrere LED und/oder einen Lautsprecher.

In einer Ausgestaltung weist das Arbeitssystem eine Vielzahl von Verbindungsgeräten auf, wobei jedes Verbindungsgerät mit einem oder mehreren der Sensorvorrichtungen über eine drahtlose Kommunikationsverbindung verbunden ist und mit dem Leitsystem über eine kabelgebundene oder kabellose Kommunikationsverbindung verbunden ist oder auf dem gleichen Gerät ausgeführt wird, insbesondere wobei das Verbindungsgerät die zugehörige Sensorvorrichtung teilweise zur Durchführung eines der Sensorvorrichtung zugewiesenen Prozesses steuert. Durch die Verwendung von Verbindungsgeräten können die Sensorvorrichtungen einfach und insbesondere ohne performante Prozessoren ausgeführt sein, wodurch sie besonders kompakt sein können.

Beispielsweise sind die Verbindungsgeräte Teile des Korrelationsmoduls, wodurch die Fähigkeiten der Verbindungsgeräte effektiv genutzt werden können.

In einer Ausführungsform der Erfindung erstellen die Verbindungsgeräte Ereignisdatenpakete und übermitteln diese an das Korrelationsmodul, insbesondere wobei ein Ereignisdatenpaket von einem der Verbindungsgeräte erstellt wird, wenn ein Auslöseereignis vorliegt, insbesondere wobei das Auslöseereignis der Verbindungsaufbau einer Kommunikationsverbindung zwischen einer der Sensorvorrichtungen und dem Verbindungsgerät, das Verbindungsende der Kommunikationsverbindung zwischen einer der Sensorvorrichtungen und dem Verbindungsgerät, das Erkennen eines hochpriorisierten Ereignisses, und/oder das Über- und/oder Unterschreiten eines Grenzwerts ist. Dadurch können die Sensordaten der Sensoren der Verbindungsgeräte in den Bericht einfließen, was diesen genauer macht.

Der Grenzwert bezieht sich zum Beispiel auf Messwerte der Sensoren, wie Temperaturwerte, oder den Zustand des Geräts (z.B. mehr als x Reboots in den letzten y Stunden).

In diesem Falle kann es sein, dass ein Verbindungsgerät eine Doppelfunktion übernimmt, wenn es zunächst ein Ereignisdatenpaket erstellt und zugleich in seiner Funktion als Teil des Korrelationsmoduls das Ereignisdatenpaket mit Kontextinformationen korreliert und wenigstens einen Kontextdatensatz erzeugt.

Beispielsweise wird ein Ereignisdatenpaket von der Sensorvorrichtung in regelmäßigen Abständen erstellt und/oder ein Ereignisdatenpaket wird dann erstellt, wenn ein Auslöseereignis vorliegt und eine Angabe zum Auslöseereignis umfasst, insbesondere wobei das Auslöseereignis ein Betätigen der Sensorvorrichtung durch den Benutzer, der Ablauf einer vorbestimmten Zeit, der Füllstand einer Queue, der Verbindungsaufbau einer Kommunikationsverbindung zwischen der Sensorvorrichtung und dem Verbindungsgerät, das Verbindungsende der Kommunikationsverbindung zwischen der Sensorvorrichtung und dem Verbindungsgerät, das Erkennen eines hochpriorisierten Ereignisses, und/oder das Über- und/oder Unterschreiten eines Grenzwerts ist. Auf diese Weise kann die Tätigkeit des Benutzers präzise erfasst werden.

Die Queue ist beispielsweise eine Puffer Queue, in der niedrigpriorisierte Ereignisse, wie Telemetriedaten, gesammelt werden. Hochpriorisierte Ereignisse sind zum Beispiel das Vorliegen von Fehlerbedingungen, wie Fehlfunktionen der Firmware.

In einem Aspekt der Erfindung umfasst ein Ereignisdatenpaket aktuelle Sensordaten wenigstens eines Sensors der Sensorvorrichtung sowie wenigstens eine Situationsangabe der Sensorvorrichtung, insbesondere wobei die aktuellen Sensordaten die Anzahl zwischen zwei Ereignispunkten getätigten Schritten, die Art der Aktivität zwischen zwei Ereignispunkten, der Bewegungsaufwand zwischen zwei Ereignispunkten, die Dauer zwischen zwei Ereignispunkten, Gesten und/oder einen Messwert eines Sensors der Sensorvorrichtung, insbesondere der Wert und/oder das Bild eines erfassten Barcodes und/oder ein Bild einer Kamera, umfassen, und/oder die Situationsangabe eine Angabe des Prozessschritts, insbesondere einen Identifikator des Prozessschritts, einen Identifikator der jeweiligen Sensorvorrichtung, einen Identifikator des jeweiligen Verbindungsgeräts, einen Zeitstempel, den aktuellen Ort, den Ladezustand des Akkumulators oder der Batterie der Sensorvorrichtung, Angaben über die Verbindungsqualität zwischen der Sensorvorrichtung und dem Verbindungsgerät, Informationen über die Sensorvorrichtung (Seriennummer, Hersteller, Model, Softwareversion), Informationen über das Verbindungsgerät, die relative Position der Sensorvorrichtung zum Verbindungsgerät, der Abstand zwischen der Sensorvorrichtung und dem Verbindungsgerät, eine Angabe dazu, ob das Verbindungsgerät mobil oder stationär ist, und/oder einen Identifikator der Konfiguration der Sensorvorrichtung umfasst. Dadurch stellen die Ereignisdatenpakete über die eigentlichen Sensordaten hinaus Informationen bereit, die die Qualität des Berichtes deutlich verbessern.

Die Ereignispunkte können Auslöseereignisse sein, insbesondere das Betätigen der Sensorvorrichtung bzw. das Betätigen der Betätigungsvorrichtung.

Zur schnellen und effizienten Verarbeitung der gesammelten Daten, insbesondere in Echtzeit, können die Ereignisdatenpakete, insbesondere die Informationen in den Ereignisdatenpaketen, mit den Kontextinformationen mittels eines Maschinenlernmoduls des Korrelationsmoduls korreliert werden, und/oder anhand des Zeitstempels, dem Identifikator der jeweiligen Sensorvorrichtung, dem Identifikator des jeweiligen Verbindungsgeräts, einem Identifikator des Benutzers, einem Identifikator des Prozessschritts und/oder der Angabe, die das Ereignisdatenpaket einem Ereignis, einer Tätigkeit, einem Ort und/oder einem Gegenstand zuordnet, korreliert werden.

In einem Aspekt der Erfindung enthält der Bericht als Zustand des Arbeitssystems Angaben über den Aufbau des Arbeitssystems, insbesondere von stationären Arbeitsstationen des Arbeitssystems; die Auslastung des Arbeitssystems, insbesondere der Sensorvorrichtungen; den Zustand der Sensorvorrichtungen, Gateways und/oder Verbindungsgeräte; den wenigstens einen mit dem Arbeitssystem durchgeführten Prozess, insbesondere einzelne Prozessschritte des Prozesses, der Reihenfolge einzelner Prozessschritte des Prozesses, der Länge einzelner Prozessschritte des Prozesses, den Prozessbeginn und/oder das Prozessende; die Entladungsgeschwindigkeit des Akkumulators oder der Batterie der Sensorvorrichtungen; die Akku- oder Batterielebenszeit; die Art der eingelesenen Barcodes; die Dauer eines Einlesevorgangs; der Erfolg eines Einlesevorgangs; die Anzahl an Schritten zwischen zwei Einlesevorgängen; die Veränderung des Ortes zwischen zwei Einlesevorgängen; die Softwareversion von Sensorvorrichtungen; die Softwareversion von Verbindungsgeräten und/oder Informationen zum Ladeverhalten der Sensorvorrichtung. Mittels eines solchen Berichtes kann das Arbeitssystem analysiert werden, insbesondere in Echtzeit, um zum Beispiel versteckte Ineffizienzen im Prozess aufzudecken.

Die Art bzw. Typ (Strichcode, QR-Code, Data-Matrix, etc.) der eingelesenen Barcodes wird auch als Symbology bezeichnet.

Die Angaben über Aufbau des Systems können auch die Orte von Arbeitsstationen beschreiben, auch die relativen Orte untereinander.

Alternativ oder zusätzlich kann der Bericht als Abweichungen vom vorherigen Betriebsablauf Angaben enthalten von Sensorvorrichtungen mit weniger oder mehr ausgeführten Prozessschritten als im vorherigen Betriebsablauf; Änderungen im Aufbau des Arbeitssystems, insbesondere von stationären Arbeitsstationen des Arbeitssystems; Änderungen der Auslastung des Arbeitssystems, insbesondere der Sensorvorrichtungen; Änderungen des Zustands des Arbeitssystems, insbesondere der Sensorvorrichtungen; Änderungen des wenigstens einen mit dem Arbeitssystem durchgeführten Prozesses, insbesondere einzelner Prozessschritte des Prozesses, der Reihenfolge einzelner Prozessschritte, der Länge einzelner Prozessschritte, des Prozessbeginns und/oder des Prozessendes; Unterschiede zwischen den gleichen Prozessen an unterschiedlichen Orten und/oder Arbeitsstationen; und/oder Unterschiede zu Industriereferenzwerten. Ein solcher Bericht ermöglich zum Beispiel eine Überwachung des Arbeitssystems, insbesondere in Echtzeit, sodass auf Abweichungen schnell reagiert werden kann.

Industriereferenzwerte stammen beispielsweise aus externen Quellen, wie Marktforschungsberichten, oder anderen Arbeitssystemen.

Die Überwachung kann dabei ähnlich der Überwachung einer automatisierten Industrieanlage erfolgen, zum Beispiel in einer Leitwarte.

Um Langzeitanalysen und Vergleiche mit der Vergangenheit zu ermöglichen, können die Kontextdatensätze und/oder Ereignisdatenpakete in einem Datenspeicher abgelegt werden, um zu einem späteren Zeitpunkt als Kontextdatensätze der Vergangenheit und/oder Ereignisdatenpakete der Vergangenheit verwendet zu werden, insbesondere wobei der Bericht auf Grundlage der aktuellen von dem Korrelationsmodul erzeugten Kontextdatensätzen und im Datenspeicher abgelegten Kontextdatensätzen der Vergangenheit erstellt wird.

Für umfassende und vielfältige Kontextinformationen kann das Korrelationsmodul Kontextinformation von dem Leitsystem, einem Warenwirtschaftssystem, einem Enterprise Resource Planning System, einer Maschinensteuerung einer Maschine des Systems, einem Mobile-Device-Management-System (MDM), Daten von externen Datenanbietern, und/oder öffentlich abrufbaren Datenquellen erhalten.

Beispielsweise umfassen die Kontextinformationen Informationen zur Arbeitsumgebung, Prozessen des Arbeitssystems, den Benutzern des Arbeitssystems und/oder zur Auslastung des Arbeitssystems, insbesondere die Temperatur der Arbeitsumgebung, Angaben über die gewöhnliche Arbeitsauslastung an einem Arbeitstag, die erwartete Auslastung, die Abhängigkeiten von Tätigkeiten untereinander, und/oder der Zustand der öffentlichen Gesundheit in der Region des Arbeitssystems. Dadurch können mithilfe der Kontextinformationen die Sensordaten bzw. die Ereignisdatenpakete in einen größeren Kontext gestellt werden, insbesondere über die einzelne Sensorvorrichtung hinaus.

Denkbar ist auch, dass die Kontextinformationen durch einen Benutzer des Arbeitssystems, insbesondere einer Aufsichtsperson des Arbeitssystems, wie eines Vorarbeiters oder Schichtplaners, bezüglich ihrer Relevanz für das Arbeitssystem bewertet werden. Diese Bewertung kann das Korrelationsmodul als Rückmeldung erhalten und daraufhin die zur Erzeugung der Kontextdatensätze verwendeten Kontextinformationen gewichten oder verändert auswählen.

In einer Ausgestaltung der Erfindung wird der Bericht an das Leitsystem, ein Warenwirtschaftssystem, ein Enterprise Resource Planning System, ein mobiles Endgerät, einen Arbeitsplatzcomputer und/oder eine Ausgabevorrichtung übermittelt, insbesondere wobei die Ausgabevorrichtung dazu eingerichtet ist, den Bericht auszugeben. Dadurch wird sichergestellt, dass der Bericht von den Adressaten des Berichtes einfach aufgefunden werden kann.

Das mobile Endgeräte kann ein Smart Device und/oder ein Computer einer Aufsichtsperson des Arbeitssystems sein, wie eines Vorarbeiters oder Schichtplaners. Die Übermittlung kann dabei per E-Mail, RSS Feed, API Zugriff oder dergleichen erfolgen.

In einer Ausführungsform erhält das Analysemodul die Ereignisdatenpakete. Das Analysemodul erstellt basierend auf den Ereignisdatenpaketen und/oder Ereignisdatenpaketen der Vergangenheit Kontextinformationen für Ereignisdatenpakete und übermittelt die Kontextinformationen an das Korrelationsmodul, insbesondere wobei das Analysemodul ein Kontextmaschinenlernmodul aufweist, das basierend auf den Ereignisdatenpaketen und/oder Ereignisdatenpaketen der Vergangenheit die Kontextinformationen für Ereignisdatenpakete erstellt. Auf diese Weise kann Kontext der Ereignisdatenpakete aus Ereignisdatenpaketen selbst gewonnen werden, zum Beispiel aus der Abfolge von Ereignisdatenpakete durch das Erkennen von Muster oder durch Bilderkennung.

Beispielsweise ermittelt das Analysemodul als Kontextinformation zu einem Ereignisdatenpaket eine Angabe, die das Ereignisdatenpaket einem Ereignis, einer Tätigkeit, einem Ort und/oder einem Gegenstand zuordnet, insbesondere wobei die Angabe eine Wahrscheinlichkeit enthält, dass das Ereignisdatenpaket dem Ereignis, der Tätigkeit, dem Ort und/oder dem Gegenstand zuzuordnen ist. Auf diese Weise kann der Kontext des Ereignisses sehr präzise beschrieben werden.

Die ermittelte Wahrscheinlichkeit ist insbesondere eine bedingte Wahrscheinlichkeit.

Insbesondere werden unter einem Ereignis, einer Tätigkeit, einem Ort und/oder einem Gegenstand sowohl spezifische Ereignisse, Tätigkeiten, Orte und/oder Gegenstände verstanden, wie "Regal 5" oder "Aufnehmen der Windschutzscheibe", als auch Kategorien von Ereignissen, Tätigkeiten, Orten und/oder Gegenständen, wie "Regal" oder "Aufnehmen eines Gegenstands".

In einer Ausgestaltung der Erfindung ermittelt das Analysemodul basierend auf den Kontextdatensätzen, insbesondere aktuellen Kontextdatensätzen und Kontextdatensätzen der Vergangenheit, und/oder dem Bericht wenigstens eine Systemverbesserung, insbesondere wobei die Systemverbesserung an das Leitsystem, ein Warenwirtschaftssystem, ein Enterprise Resource Planning System, ein mobiles Endgerät und/oder eine Ausgabevorrichtung übermittelt wird. Auf diese Weise kann das Überwachungssystem das Arbeitssystem verbessern.

Die Ausgabe der Systemverbesserung erfolgt zum Beispiel zusammen mit wenigstens einem Bericht. Die Aufsichtsperson erhält auf diese Weise mittels des Berichtes einen Einblick ("Insight") in das Arbeitssystem und zugleich eine Anweisung, wie das Arbeitssystem verbessert werden kann.

Zum Beispiel werden zur Vereinfachung der Erstellung des Berichtes die folgenden Schritte durchgeführt:
- Ermitteln des Zustands des Arbeitssystems, des bisherigen Betriebsablaufes und/oder Abweichungen vom bisherigen Betriebsablauf auf Grundlage der Kontextdatensätze, und
- Erstellen des Berichtes anhand des Zustands des Arbeitssystems, des bisherigen Betriebsablaufes und/oder Abweichungen vom bisherigen Betriebsablauf.

Zur schnellen und effizienten Verarbeitung der gesammelten Daten, insbesondere in Echtzeit, kann zur Ermittlung des Zustands des Arbeitssystems, des bisherigen Betriebsablaufes und/oder Abweichungen vom bisherigen Betriebsablauf ein erstes Maschinenlernmodul des Analysemoduls verwendet werden, insbesondere wobei das erste Maschinenlernmodul ein künstliches neuronales Netzwerk, einen Decision Tree, einen statistischen Algorithmus, einen Clusteralgorithmus, ein Modul zur Textgenerierung und/oder eine Principal Component Analysis aufweist.

In einer Ausgestaltung der Erfindung wird zur Erstellung des Berichtes eine Berichtvorlage verwendet, wobei die Berichtvorlage Anweisungen für das Analysemodul enthält, um anhand der Kontextdaten den der Berichtvorlage zugeordneten Bericht zu erzeugen. Dies vereinfacht die Erstellung des Berichtes.

Beispielsweise gibt die Berichtvorlage die für den Bericht benötigten Eingangsdaten und wenigstens einen Auswerteschritt zur Ermittlung des Zustands des Arbeitssystems, des bisherigen Betriebsablaufes und/oder von Abweichungen vom bisherigen Betriebsablauf an sowie definiert optional Systemverbesserungen aufgrund der Ergebnisse des wenigstens einen Auswerteschritts. Auf diese Weise kann die Erstellung des Berichtes weiter vereinfacht werden.

Die Berichtsvorlage kann dabei angeben, aus welcher Quelle die Eingangsdaten beziehbar sind.

Um die Aussagekraft der Berichte zu erhöhen, kann die Berichtvorlage wenigstens eine Signifikanzbedingung definieren, wobei das Analysemodul anhand der Kontextdatensätze prüft, ob die wenigstens eine Signifikanzbedingung erfüllt ist, wobei der Bericht anhand der jeweiligen Berichtvorlage nur erzeugt wird, wenn die Signifikanzbedingung erfüllt ist.

Zur effizienten Erstellung des Berichtes kann das Analysemodul eine Berichtvorlage auswählen oder generieren, und anhand der Berichtvorlage und den Kontextdatensätzen den Bericht erstellen.

Die Generierung der Berichtvorlage anhand der Kontextdatensätze und der Kontextdatensätze aus der Vergangenheit können mittels eines zweiten Maschinenlernmoduls des Analysemoduls erfolgen.

In einer Ausgestaltung der Erfindung generiert das Analysemodul mehrere Berichtvorlagen oder wählt das Analysemodul mehrere Berichtvorlagen aus, erstellt für jede Berichtvorlage den Bericht und bewertet die Relevanz der Berichte, wobei nur derjenige Bericht der erstellten Berichte weiterverwendet wird, der die höchste Relevanz hat, oder nur eine vorbestimmte Anzahl an den Berichten der erstellten Berichte weiterverwendet werden, die die höchste Relevanz haben. Auf diese Weise kann die Anzahl an Berichten reduziert werden, um die Aufmerksamkeit der Aufsichtsperson oder anderer Personen nicht zu sehr zu beanspruchen. Gleichzeitig wird sichergestellt, dass die Berichte für die Aufsichtsperson oder andere Personen relevant sind.

Zur schnellen und effizienten Verarbeitung der gesammelten Daten, insbesondere in Echtzeit, kann das Analysemodul ein drittes Maschinenlernmodul aufweisen, dass die Relevanz der Berichte bewertet, insbesondere anhand von Rückmeldungen des Benutzers, einer Aufsichtsperson und/oder Benutzer anderer Arbeitssysteme.

Um auch die Wiedergabe des Berichtes zu vereinfachen, kann die Berichtvorlage wenigstens eine Vorgabe zur Wiedergabe des Berichts machen, insbesondere bezüglich des Gerätes auf dem der Bericht anzuzeigen ist und/oder der Darstellungsweise des Berichtes.

In einer Ausführungsform der Erfindung wird die Systemverbesserung an ein Verteilungsmodul übermittelt, wobei das Verteilungsmodul basierend auf der Systemverbesserung wenigstens einen Änderungsbefehl für wenigstens eine der Sensorvorrichtungen erstellt und den Änderungsbefehl an die jeweilige Sensorvorrichtung, das der jeweiligen Sensorvorrichtung zugehörige Verbindungsgerät und/oder das Leitsystem übermittelt, wodurch eine automatische Anpassung des Arbeitssystems erfolgt.

Beispielsweise gibt die Sensorvorrichtung eine Handlungsanweisung an den Benutzer auf Grundlage des Änderungsbefehls aus, um die Tätigkeit des Benutzers und damit das Arbeitssystem zu ändern.

Zur Verbesserung des Arbeitssystems als Ganzes, kann das Leitsystem und/oder das zugehörige Verbindungsgerät basierend auf der Systemverbesserung den der jeweiligen Sensorvorrichtung zugewiesenen Prozess verändern und/oder die Sensorvorrichtung anweisen, eine Handlungsanweisung auszugeben.

Zur schnellen und effizienten Verarbeitung der gesammelten Daten, insbesondere in Echtzeit, können das Maschinenlernmodul des Korrelationsmoduls, das erste Maschinenlernmodul des Analysemoduls, ein zweites Maschinenlernmodul des Analysemoduls, das dritte Maschinenlernmodul des Analysemoduls, ein viertes Maschinenlernmodul des Analysemoduls, das Kontextmaschinenlernmodul des Analysemoduls und/oder ein Maschinenlernmodul des Verteilungsmodules ein künstliches neuronales Netzwerk, einen Decision Tree, einen statistischen Algorithmus, einen Clusteralgorithmus, ein Modul zur Textgenerierung und/oder eine Principal Component Analysis sein oder umfassen.

Die verschiedenen Maschinenlernmodule können als separate Maschinenlernmodule ausgeführt sein oder eine, mehrere oder alle Maschinenlernmodule können gemeinsam ausgeführt sein. In diesem Falle können die zwischen den Modulen ausgetauschten Informationen, z.B. die Kontextdatenpakete, latente Variablen sein.

Ferner wird die Aufgabe gelöst durch ein System mit einem Arbeitssystem und einem Überwachungssystem, wobei das System dazu eingerichtet ist, ein zuvor beschriebenes Verfahren durchzuführen.

Die zum Verfahren beschriebenen Merkmale und Vorteile gelten gleichermaßen für das System und umgekehrt.

Weiterhin sind sämtliche Komponenten des Systems dazu ausgebildet und eingerichtet, die von ihnen im Verfahren durchgeführte Funktion auch durchzuführen.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1:: schematisch eine Produktionshalle mit einem erfindungsgemäßen System,
- Fig. 2:: einen Benutzer des Systems mit Sensorvorrichtungen sowie Verbindungsgeräten des Systems gemäß Figur 1,
- Fig. 3:: eine schematische Darstellung eines Sensorgerätes als Sensorvorrichtung gemäß Figur 2,
- Fig. 4:: ein schematisches Diagramm des Systems zur Verdeutlichung von Datenflüssen,
- Fig. 5:: schematisch eine zweite Ausführungsform eines erfindungsgemäßen Systems,
- Fig. 6:: ein Beispiel eines in der zweiten Ausführungsform erstellten Berichtes, und
- Fig. 7:: ein Beispiel eines weiteren Berichtes in der Darstellung für einen Benutzer.

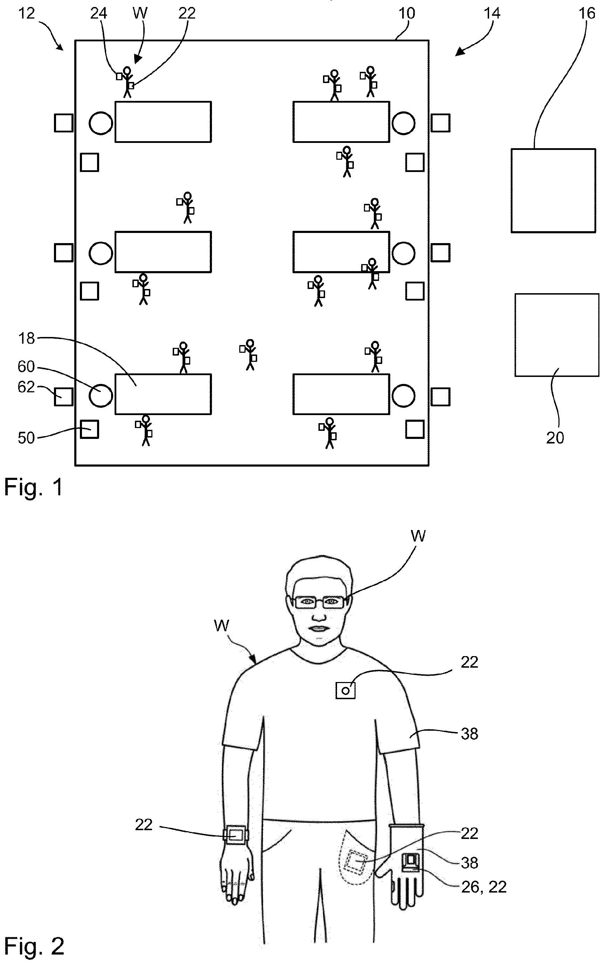

In Figur 1 ist äußerst schematisch eine Halle 10 in Vogelperspektive sowie ein System 12 in Vogelperspektive dargestellt.

Das System 12 hat ein Arbeitssystem 14 sowie ein Überwachungssystem 16.

Die Halle 10 ist beispielsweise eine Fertigungshalle, in der ein Produkt gefertigt wird. Zum Beispiel ist das Produkt ein Kraftfahrzeug oder Teile hierfür.

Zur Fertigung des Produktes ist ein vordefinierter Prozess mit verschiedenen Prozessschritten durchzuführen, die von Werkern, im folgenden Benutzern W genannt, durchgeführt werden.

Es ist denkbar, dass anstatt der Werker autonome Roboter oder Drohnen als Benutzer W zum Einsatz kommen.

Hierzu sind in der Halle 10 verschiedene Arbeitsstationen 18 des Arbeitssystems 14 angeordnet, an denen einer oder mehrerer der Prozessschritte durchgeführt werden.

Im gezeigten Ausführungsbeispiel sind zwei Produktionslinien mit jeweils drei Arbeitsstationen 18 vorgesehen. Die Arbeitsstationen 18 einer Produktionslinie sind zueinander benachbart, in Figur 1 sind sie senkrecht zueinander.

Die Produktionslinien sind somit parallel zueinander angeordnet.

Zudem weist das Arbeitssystem 14 ein Leitsystem 20, mehrere Verbindungsgeräte 22 sowie mehrere Sensorvorrichtungen 24 auf.

Die Sensorvorrichtungen 24 werden von den Benutzern W getragen. Beispielsweise trägt jeder Benutzer W wenigstens eine oder mehrere Sensorvorrichtungen 24, wie in Figur 2 dargestellt.

Die Sensorvorrichtungen 24 weisen einen Sensor 28 sowie optional ein Ausgabemittel 30 und ein Betätigungselement 32 auf.

Die Sensorvorrichtungen 24 sind zum Beispiel Headsets mit einem Mikrofon als Sensor 28 und Kopfhörern als Ausgabemittel 30. Zudem kann das Headset einen Taster als Betätigungselement 32 aufweisen.

Zum Beispiel kann auch eine Kamera, beispielsweise eine Helmkamera oder eine an einem Kleidungsstück befestigte Kamera, eine Sensorvorrichtung 24 sein. Die Kamera dient als Sensor 28 und optionale Bildschirme, LED, Lautsprecher oder Taster der Kamera als Ausgabemittel 30 bzw. Betätigungselement 32.

Auch ein Barcodelesegerät kann eine Sensorvorrichtung 24 sein, wobei der Barcodeleser des Barcodelesegerätes der Sensor 28 ist und optionale Bildschirme, LED, Lautsprecher oder Taster der Kamera als Ausgabemittel 30 bzw. Betätigungselement 32 dienen.

Auch können tragbare Sensorgeräte 26, wie sie als Nebengerät aus der DE 10 2019 118 969 A1 oder der DE 10 2020 106 369 A1 bekannt sind, Sensoreinrichtungen 24 sein.

Das Sensorgerät 26 hat einen Sensor 28, einen Bildschirm als Ausgabemittel 30, eine Steuereinheit 34 mit einem Kommunikationsmodul 36 und einem Stromspeicher, wie einen Akkumulator.

Das Sensorgerät 26 hat zudem ein Betätigungselement 32, beispielsweise in Form eines Tasters oder dadurch, dass der Bildschirm berührungsempfindlich ausgeführt ist.

Das Sensorgerät 26 ist insbesondere ein Gerät, dessen Funktion auf spezielle Einsatzfälle begrenzt ist. Es kann hierzu ein eingebettetes System sein und/oder eine kompakte Form aufweisen.

Beispielsweise ist das Sensorgerät 26 kein Multifunktionsgerät, also kein Smart Device, wie ein Smartphone, ein Tablet, eine SmartWatch oder eine Smart Glass.

Es ist auch denkbar, dass die Sensorvorrichtung 24 ein Smart Device, wie ein Smartphone, ein Tablet, eine SmartWatch oder eine Smart Glass ist. Der Sensor 28 ist beispielsweise ein optischer Sensor, wie beispielsweise ein Barcodeleser oder eine Kamera. Denkbar ist auch, dass das Sensorgerät 26 als Sensor 28 zusätzlich oder anstelle des optischen Sensors andere Sensoreinheiten wie einen RFID-Leser, Berührungssensoren oder Beschleunigungssensoren aufweist.

Es sei jedoch darauf hingewiesen, dass dies rein beispielhafte Ausführungsformen zur Illustration sind. Alternativ kann das Sensorgerät ohne Bildschirm ausgebildet sein.

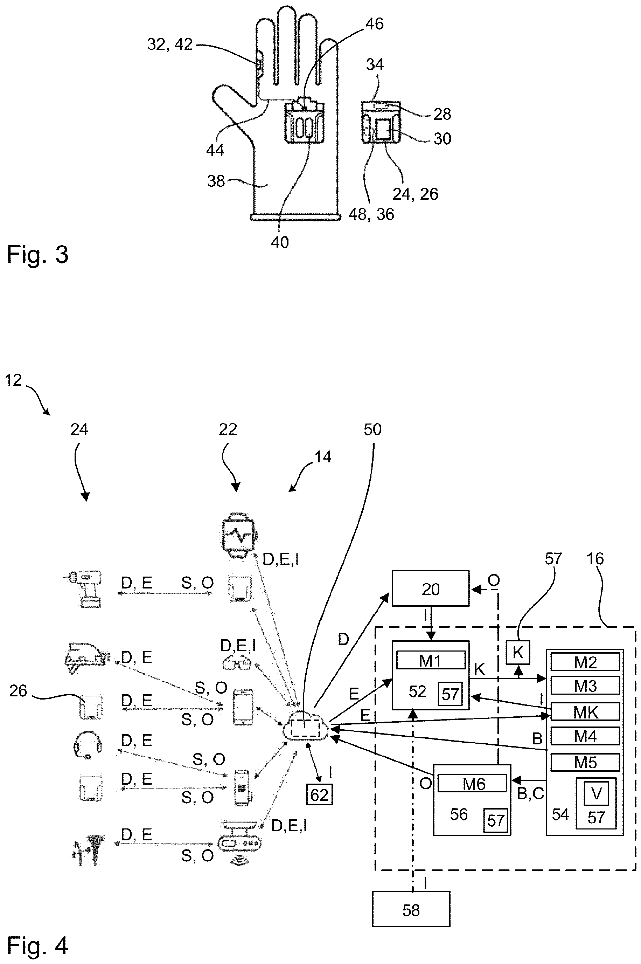

Wie in Figur 3 zu sehen, weist das Arbeitssystem 14 zusätzlich ein Kleidungsstück 38, insbesondere einen Handschuh auf, mittels dem das Sensorgerät 26 am Körper des Benutzers W befestigt werden kann. Das Sensorgerät 26 bzw. die Kombination aus dem Kleidungsstück 39 und dem Sensorgerät 26 ist somit ein sogenanntes "Wearable".

Hierzu weist das Kleidungsstück 38 eine Halterung 40 auf, in die das Sensorgerät 26 wiederholt werkzeugfrei abnehmbar und anbringbar befestigt werden kann.

Auch kann das Kleidungsstück 38 ein Eingabemittel 42, beispielsweise einen Auslöser für das Sensorgerät 26 aufweisen. Der Auslöser bzw. das Eingabemittel 42 kann an einem Finger des Handschuhs vorgesehen sein. Denkbar ist auch, dass das wenigstens eine Eingabemittel 42 bzw. ein oder mehrere weitere Eingabemittel 42 an der Halterung 40 vorgesehen sind.

Mittels wenigstens eines Kabels 44 und wenigstens eines Kontaktes 46 in der Halterung 40 wird das Eingabemittel 42 mit dem Sensorgerät 26 verbunden, sobald das Sensorgerät 26 in der Halterung 40 eingesetzt ist.

Das Eingabemittel 42 am Kleidungsstück 38 kann somit ebenfalls als Betätigungselement 32 des Sensorgeräts 26 angesehen werden.

Als Sensorvorrichtungen 24 kommen jedoch auch stationäre Sensorvorrichtungen, wie Temperatur und Windmesser (Figur 4) in Betracht.

Die Sensorgeräte 26 weisen alle ein Kommunikationsmodul 48 auf, über das die Sensorgeräte 26 mit den Verbindungsgeräten 22 verbunden sind.

Sensorvorrichtungen 24, insbesondere die Sensorgeräte 26 können mit verschiedenen Konfigurationen betrieben werden, um verschiedene Aufgaben innerhalb des Prozesses durchzuführen. Durch die Konfigurationen werden die Funktionen der Sensorvorrichtung 24 definiert, um der Sensorvorrichtung 24 die Funktionalitäten zu erlauben, die für den jeweiligen Prozessschritt notwendig sind.

Die Verbindungsgeräte 22 sind Geräte, die typischerweise eine größere Rechenleistung als die Sensorvorrichtungen 24, insbesondere die Sensorgeräte 26 aufweisen. Beispielsweise sind die Verbindungsgeräte 22 als Smart Devices ausgebildet, wie ein Smartphone, ein Tablet, eine SmartWatch oder eine SmartGlass, oder ein mit entsprechenden Prozessoren und Kommunikationsmodulen ausgestattetes Armband. In diesem Fall sind die Verbindungsgeräte 22 ebenfalls mobil und werden vom Benutzer W getragen.

Die Kombination aus Sensorgerät 26 und Verbindungsgerät 22 entspricht zum Beispiel dem Sensor- und Informationssystem aus Nebengerät (Sensorgerät 26) und Hauptgerät (Verbindungsgerät 22) der DE 10 2019 118 969 A1 oder der DE 10 2020 106 369 A1.

Denkbar ist jedoch auch, dass stationäre Geräte, wie Basisstationen für drahtlose Kommunikation, beispielsweise WLAN Access Points oder Mobilfunkbasisstationen als Verbindungsgeräte 22 verwendet werden, aber auch stationäre Geräte, die als WLAN Clients arbeiten. Auch können Verbindungsgeräte 22 per USB mit einem Computer oder dem Leitsystem 20 verbunden sein und per drahtloser Kommunikation mit der Sensorvorrichtung 24.

Denkbar ist jedoch auch, dass die Sensorvorrichtung 24 mit dem Verbindungsgerät 22 in einem Gerät verbaut ist.

Die Verbindungsgeräte 22 unterhalten einerseits eine Kommunikationsverbindung mit dem Leitsystem 20 sowie andererseits mit denen ihnen zugewiesenen Sensorvorrichtung 24.

Dabei können mehrere Sensorvorrichtungen 24 einem der Verbindungsgeräte 22 zugewiesen sein. Beispielsweise ist es jedoch nicht möglich, dass eine Sensorvorrichtung 24 mit mehreren Verbindungsgeräten 22 gleichzeitig verbunden ist.

Das Leitsystem 20 wird auf einem oder mehreren zentralen Computern und/oder Servern betrieben.

Das Leitsystem 20 ist beispielsweise ein Warenwirtschaftssystem, ein Enterprise Resources Planning System (ERP-System) oder dergleichen und dient zur Kontrolle, zum Qualitätsmanagement und optional zur Steuerung der Prozesse des Arbeitssystems 14, beispielsweise der Prozesse zur Fertigung des Produktes.

Das Leitsystem 20 ist über eine Kommunikationsverbindung direkt oder indirekt mit jedem der Verbindungsgeräte 22 dauerhaft oder vorübergehend verbunden.

Diese Kommunikationsverbindung kann kabellos, kabelgebunden oder durch eine Kombination hiervon erfolgen. Beispielsweise sind die Verbindungsgeräte 22, insbesondere wenn es sich um mobile Geräte handelt, über drahtlose Kommunikationsverbindungen mit Gateways 50 des Arbeitssystems 14 verbunden, wobei die Gateways 50 wiederum eine kabelgebundene Kommunikationsverbindung, beispielsweise mittels LAN oder dem Internet, mit dem Leitsystem 20 aufweisen. Die Gateways 50 sind in Figur 4 lediglich gestrichelt angedeutet.

Die Gateways 50 können gleichzeitig Verbindungsgeräte 22 sein, mit denen sich Sensorvorrichtungen 24 direkt verbinden.

Das Überwachungssystem 16 weist, wie in Figur 4 gezeigt, wenigstens ein Korrelationsmodul 52, ein Analysemodul 54, ein Verteilungsmodul 56 und wenigstens einen Datenspeicher 57 auf.

Der Datenspeicher 57 kann Teil des Korrelationsmoduls 52, des Analysemoduls 54 oder des Verteilungsmoduls 56 sein. Auch kann jedes dieser Module 52, 54, 56 einen Datenspeicher 57 haben.

Das Korrelationsmodul 52, das Analysemodul 54 und das Verteilungsmodul 56 können als Applikationen auf einem oder mehreren zentralen Computern oder Servern ausgeführt werden. Sie stehen zum Datenaustausch in Kommunikationsverbindung untereinander.

Zudem stehen zumindest das Korrelationsmodul 52 und das Verteilungsmodul 56 in Kommunikationsverbindung mit den Verbindungsgeräten 22 und/oder den Sensorvorrichtungen 24.

Gleichzeitig ist es möglich, dass eine oder mehrere der Verbindungsgeräte 22 selbst Funktionen der Korrelationsmodul 52 übernehmen und somit ebenfalls als zumindest Teil des Korrelationsmoduls 52 anzusehen sind.

Ebenfalls ist es denkbar, dass ein oder mehrere Verbindungsgeräte 22 Funktionen des Leitsystems 20 ausführen. Somit kann das Verbindungsgerät 22 sowohl Teil des Korrelationsmoduls 52 als auch Teil des Leitsystems 20 sein. Zudem ist es denkbar, dass ein Verbindungsgerät 22 wie eine Sensorvorrichtung 24 auch Ereignisdatenpakete E erzeugt.

Zur Produktion des Produktes arbeiten die Benutzer W mithilfe der Sensorvorrichtungen 24 an den verschiedenen Arbeitsstationen 18. In Figur 4 ist der Datenfluss im System 12 während der Arbeit des Benutzers W schematisch dargestellt.

Während der Benutzer W an einer der Arbeitsstationen 18 die zu dieser Arbeitsstation 18 gehörenden Prozessschritte ausführt, wird er die Sensoren 28 der Sensorvorrichtungen 24 verwenden oder es werden die Sensoren 28 automatisch aktiviert.

Beispielsweise muss der Benutzer W, bevor er ein Bauteil an dem Produkt anbringt, einen Barcode des Produktes mittels des Sensors 28 des Sensorgerät 26 erfassen. Zum Einlesen des Barcodes löst der Benutzer W zum Beispiel den Sensor 28 durch Betätigen des Eingabemittel 42 am Kleidungsstück 38 aus.

Dadurch werden Sensordaten D erzeugt, im beschriebenen Beispiel der Wert des Barcodes, ein Bild des Barcodes oder das gesamte vom Barcodescanner aufgenommene Bild.

Weitere Beispiele für Sensordaten sind Beschleunigungen, bestimmte Beschleunigungsmuster, beispielsweise Schritte, Bewegungsabläufe, wie Drehbewegungen der Hand zum Festziehen von Schrauben, oder Gesten, eingelesene RFID-Kennungen und/oder Temperaturmessungen.

Die von der Sensorvorrichtung 24 erzeugten Sensordaten D werden dann an das Verbindungsgerät 22 übertragen. Das Verbindungsgerät 22 überträgt die Sensordaten schließlich weiter an das Leitsystem 20. Dies kann, sofern Teile des Leitsystems 20 auf dem Verbindungsgerät 22 ausgeführt werden, durch geräteinterne Übertragung geschehen.

Das Leitsystem 20 kann dann die Sensorvorrichtung 24 zumindest teilweise zur Durchführung eines Prozesses bzw. von Prozessschritten anleiten oder steuern, insbesondere ist dies der Prozess bzw. sind die Prozessschritte, die der entsprechenden Arbeitsstation 18 oder sogar der genauen Sensorvorrichtung 24 zugewiesen sind. Dabei können die verschiedenen Sensorvorrichtungen 24 eines Benutzers W zugewiesenen Prozesse bzw. Prozessschritte unterschiedlich sein.

Beispielsweise überprüft das Leitsystem 20 nun die erhaltenen Sensordaten D, in diesem Falle also den Barcode, mit dem vorgesehenen Prozessschritten, die in der Halle 10 bzw. an der speziellen Arbeitsstation 18 durchgeführt werden.

Im Leitsystem 20 sind die Prozesse und Prozessschritte hinterlegt, sodass das Leitsystem 20 bereits bestimmte Sensordaten von der Sensorvorrichtung 24 erwartet. Das Leitsystem 20 kann nun die erhaltenen Sensordaten D mit den erwarteten Sensordaten vergleichen und als Ergebnis des Vergleiches dem Benutzer W eine Rückmeldung geben.

Außerdem kann das Leitsystem 20 eine Steueranweisung S an dieselbe oder eine andere Sensorvorrichtung 24 übermitteln, um dem Benutzer W zu anzuleiten. Zum Beispiel kann der Benutzer W darüber informiert werden, ob er das korrekte Bauteil anbringen möchte bzw. den korrekten Barcode eingelesen hat. Auch können dem Benutzer W weitere Informationen mittels der Ausgabemittel 30 übermittelt werden. Hierzu weist die Steuerungsanweisung S beispielsweise Angaben auf, insbesondere einen Text, der auf dem Bildschirm des Sensorgeräts 26 angezeigt werden soll.

Die Steuerungsanweisung S wird vom Leitsystem 20 mittels des Gateways 50 bzw. des Verbindungsgerätes 22 an die entsprechende Sensorvorrichtung 24 übermittelt.

Die entsprechende Sensorvorrichtung 24 empfängt die Steuerungsanweisung S und führt die in der Steuerungsanweisung S erhaltenen Instruktionen aus.

Der Benutzer W kann dann zum nächsten Prozessschritt übergehen oder, falls andere Anweisungen mitgeteilt werden, diese ausführen.

Das Verbindungsgerät 22 kann dabei alle oder Teile dieser Tätigkeiten des Leitsystems 20 zur Information und Führung des Benutzers W übernehmen. Dies ist beispielsweise in der DE 10 2019 118 969 A1 oder der DE 10 2020 106 369 A1 offenbart.

Auf diese Weise wird der Benutzer W während seiner Arbeit ständig weitere Sensordaten D erzeugen.

Neben den Sensordaten D, die zum Leitsystem 20 übermittelt werden, erzeugen die Sensorvorrichtungen 24 auch Ereignisdatenpakete E, die für das Überwachungssystem 16 und nicht für das Leitsystem 20 bestimmt sind.

Ein Ereignisdatenpaket E wird von der entsprechenden Sensorvorrichtung 24 erzeugt und enthält neben aktuellen Sensordaten D - beispielsweise die Sensordaten D, die auch an das Leitsystem 20 übermittelt wurden - noch wenigstens eine weitere Angabe, die im Rahmen dieser Offenbarung als Situationsangabe A bezeichnet wird.

Ein Ereignisdatenpaket E enthält somit mehr Informationen als die Sensordaten D, insbesondere solche Informationen, die die Gegebenheiten bzw. den Kontext näher beschreiben, unter denen die Sensordaten D erzeugt wurden.

Sowohl die Sensordaten D als auch die Situationsangaben A können sehr verschiedene Informationen sein.

Beispielsweise können die aktuellen Sensordaten D die Anzahl zwischen zwei Ereignispunkten getätigten Schritten, die Art der Aktivität zwischen zwei Ereignispunkten, der Bewegungsaufwand zwischen zwei Ereignispunkten, die Dauer zwischen zwei Ereignispunkten und/oder ein Messwert eines Sensors 28 der Sensorvorrichtung 24 sein.

Zum Beispiel kann dies das Bild einer Kamera sein, die den Sensor 28 darstellt, der Wert oder das Bild eines erfassten Barcodes, Messwerte von Beschleunigungssensoren, mittels der Beschleunigungssensoren erkannte Bewegungen, wie Schritte oder Gesten.

Ein Ereignispunkt ist dabei beispielsweise das Betätigen der Sensorvorrichtung 24 mittels des Betätigungselementes 32.

Die Situationsangaben A dagegen beschreiben die Situation, in der die Sensordaten D erhoben wurden. Beispielsweise enthalten sie eine Angabe des Prozessschritts, in dem die Sensordaten D erzeugt wurden.

Die Situationsangaben A können insbesondere Angaben zur verwendeten Sensorvorrichtung 24 enthalten, die das Ereignisdatenpaket E erstellt hat. Denkbar sind beispielsweise der aktuelle Ort, ein Identifikator der Sensorvorrichtung 24, den Ladezustand des Akkumulators oder der Batterie der Sensorvorrichtung 24, Informationen über die Sensorvorrichtung 24, wie die Seriennummer, den Hersteller, das Modell oder die Softwareversion, einen Identifikator des ausgeführten Prozessschritts und/oder einen Identifikator der Konfiguration der Sensorvorrichtung 24.

Die Situationsangaben A können jedoch auch Angaben über das Verbindungsgerät 22 enthalten, mittels dem die Sensorvorrichtung 24 mit dem Leitsystem 20 bzw. dem Überwachungssystem 16 kommuniziert. Beispielsweise enthalten diese Angaben den Ort, einen Identifikator des Verbindungsgerätes 22, Angaben über die Verbindungsqualität der Kommunikationsverbindung zwischen der Sensorvorrichtung 24 und dem Verbindungsgerät 22, Informationen über das Verbindungsgerät 22 (Seriennummer, Hersteller, Model, Softwareversion), Informationen über das Verbindungsgerät 22, die relative Position der Sensorvorrichtung 24 zum Verbindungsgerät 22, der Abstand zwischen der Sensorvorrichtung 24 und dem Verbindungsgerät 22, eine und/oder Angaben dazu, ob das Verbindungsgerät 22 mobil oder stationär ist.

Diese Situationsangaben A können vom Verbindungsgerät 22 dem von der Sensorvorrichtung 24 kommenden Ereignisdatenpaket E hinzugefügt werden und/oder die Sensorvorrichtung 24 kann diese Angaben vom Verbindungsgerät 22 empfangen und dem Ereignisdatenpaket E hinzufügen.

Als zusätzliche Situationsangabe A können die Verbindungsgeräte 22 auch einen Identifikator des Benutzers dem Ereignisdatenpaket E hinzufügen, falls sich der Benutzer W am Verbindungsgerät 22 angemeldet oder anderweitig authentifiziert hat.

Denkbar ist auch, dass die Situationsangaben einen Zeitstempel des Zeitpunkts enthalten, zu dem das Ereignisdatenpaket E und/oder die Sensordaten D erzeugt wurden.

Unter einem Identifikator wird eine Kennung verstanden, die das jeweilige Gerät bzw. die Konfiguration eindeutig bestimmt. Beispielsweise ist diese Kennung eine alphanumerische Zeichenfolge.

Die Ereignisdatenpakete E werden von jeder der Sensorvorrichtungen 24 in regelmäßigen Abständen erstellt.

Alternativ oder zusätzlich hierzu können die Ereignisdatenpakete E auch erstellt werden, wenn ein Auslöseereignis vorliegt.

Ein Auslöseereignis ist ein Ereignis im Ablauf des Prozesses, eine vorbestimmte Handlung an der Sensorvorrichtung 24, eine vorbestimmte Ortsveränderung der Sensorvorrichtung 24, wie das Verlassen eines bestimmten Bereiches, und/oder die Betätigung der Sensorvorrichtung 24 in vorbestimmter Weise.

Ein Auslöseereignis ist beispielsweise ein Betätigen der Sensorvorrichtung 24 mittels des Betätigungselementes 32 oder auf andere Weise durch den Benutzer, beispielsweise um einen Messwert mit dem Sensor 28 der Sensorvorrichtung 24 aufzunehmen.

Auch der Ablauf einer vorbestimmten Zeit nach einer Betätigung oder einem anderen Auslöseereignis kann ein weiteres Auslöseereignis darstellen.

Auch können vordefinierte Grenzwerte für die Messwerte der Sensoren vorgegeben sein, dessen Über- und/oder Unterschreitung ein Auslöseereignis darstellt. Beispielsweise kann als Grenzwert eine Anzahl an Schritten, die mittels des Beschleunigungssensors als Sensor 28 ermittelt werden, hinterlegt sein, wobei bei Überschreiten der vordefinierten Anzahl ein Auslöseereignis vorliegt.

Denkbar ist auch, dass das Überschreiten eines vorbestimmten Beschleunigungsgrenzwertes ein Auslöseereignis darstellt, um beispielsweise Stürze und somit Betriebsunfälle dokumentieren zu können.

Auch können die Messwerte eines Temperatursensors der Sensorvorrichtung 24 verwendet werden. Beispielsweise kann das Unterschreiten einer vorbestimmten Temperatur darauf hindeuten, dass der Benutzer W sich in einen gekühlten Raum begeben hat. Auch dies kann ein Auslöseereignis darstellen.

Eigenschaften der Kommunikationsverbindung mit dem Verbindungsgerät 22 können ebenfalls Auslöseereignisse darstellen, wie der Verbindungsaufbau zwischen der Sensorvorrichtung 24 und dem entsprechenden Verbindungsgerät 22 oder das Verbindungsende.

Auch können Auslöseereignisse in der Software der Sensorvorrichtung 24 definiert werden, beispielsweise der Füllstand einer Queue, wie der Puffer Queue, in der niederpriorisierte Ereignisse wie Telemetriedaten gesammelt werden. Erreicht diese Queue eine vorgegebene Länge, liegt ein Auslöseereignis vor.

Auch können einzelne hochpriorisierte Ereignisse, wie das Vorliegen einer Fehlerbedingung, ein Auslöseereignis darstellen.

Diese Auslöseereignisse können zuvor beschriebene Ereignispunkte darstellen.

Es ist denkbar, dass die Ereignisdatenpakete E stets bestimmte Situationsangaben A unabhängig von den Sensordaten D enthalten, wie den Identifikator der Sensorvorrichtung 24. Denkbar ist, dass andere Situationsangaben A nur dann in ein Ereignisdatenpaket E aufgenommen werden, wenn auch bestimmte Sensordaten D im Ereignisdatenpaket E enthalten sind.

Insbesondere habe die Ereignisdatenpakete E, unabhängig von ihrer Quelle oder ihres Inhaltes, einen identischen Aufbau und/oder eine identische Struktur, wodurch sie einfach durch ein Maschinenlernmodul, insbesondere einem künstlichen neuronalen Netzwerk, weiterverarbeitet werden können.

Die Ereignisdatenpakete E, die von der Sensorvorrichtung 24 erzeugt worden sind, werden an die Verbindungsgeräte 22 und das Korrelationsmodul 52 des Überwachungssystems 16 weitergeleitet.

Das Korrelationsmodul 52 des Überwachungssystems 16 erhält somit die Ereignisdatenpakete E von den Sensorvorrichtungen 24 bzw. den Verbindungsgeräten 22.

Die Sensordaten D und die Ereignisdatenpakete E werden beispielsweise gleichzeitig an das Leitsystem 20 und an das Korrelationsmodul 52 übermittelt.

Zuvor, gleichzeitig oder anschließend empfängt das Korrelationsmodul 52 zudem Kontextinformationen I aus weiteren Quellen.

Die Kontextinformationen I stellen, ähnlich wie die Situationsangaben A, weitere Informationen zur Situation bereit, in denen die Sensordaten D erzeugt wurden. Im Gegensatz zu den Situationsangaben A sind die Kontextinformationen I beispielsweise jedoch unspezifisch und insbesondere nicht auf die bestimmte Sensorvorrichtung 24 oder das bestimmte Verbindungsgerät 22 beschränkt, das das Ereignisdatenpaket E erstellt hat. Vielmehr können sie allgemeingültig sein.

Zum Beispiel enthalten die Kontextinformationen I ausschließlich Informationen von externen Quellen, d.h. Quellen, die keine Sensorvorrichtung 24 oder kein Verbindungsgerät 22, insbesondere nicht Teil des Arbeitssystems 14 sind, und/oder Kontextinformationen vom Analysemodul 52, insbesondere Angaben, die das Ereignisdatenpaket E einem Ereignis, einer Tätigkeit, einem Ort und/oder einem Gegenstand zuordnen, beispielsweise eine Wahrscheinlichkeit, dass das Ereignisdatenpaket E dem Ereignis, der Tätigkeit, dem Ort und/oder dem Gegenstand entspricht.

Die ermittelte Wahrscheinlichkeit ist insbesondere eine bedingte Wahrscheinlichkeit.

Insbesondere umfassen die Kontextinformationen I nicht oder nicht nur statistischen und/oder räumlichen Erkenntnisse (wie durchschnittliche Wegzeiten zwischen zwei Punkten), die aus den Ereignisdatenpaketen E gewonnen wurden.

Die Kontextinformationen I umfassen beispielsweise Informationen zur Arbeitsumgebung, zum Beispiel zur Halle 10 und/oder der Anordnung von Arbeitsstationen 18. Dies ist beispielsweise die Temperatur der Arbeitsumgebung, in diesem Falle die Temperatur in der Halle 10. Auch der Zustand der öffentlichen Gesundheit in der Region des Arbeitssystems 14 bzw. der Halle 10 können eine solche Kontextinformationen I sein.

Die Kontextinformationen I können auch Informationen zu Prozessen des Arbeitssystems enthalten, wie die Angabe einzelner Prozessschritte und/oder die in einem Prozessschritt von den Sensorvorrichtungen 24 erwarteten Sensordaten D und/oder die Abhängigkeiten von Tätigkeiten in einem Prozessschritt untereinander.

Auch Angaben zu den Benutzern des Arbeitssystems 14 können Kontextinformationen I sein, wie die Anzahl an Benutzern, die derzeit einen bestimmten Prozess oder Prozessschritte ausführen. Auch ein Identifikator eines bestimmten Benutzers W kann eine Kontextinformation sein, beispielsweise wenn sich die Benutzer W am Leitsystem 20 anmelden oder authentifizieren müssen.

Zu den Kontextinformationen I kann auch die Auslastung des Arbeitssystems 14 zählen, wie Angaben über die gewöhnliche Arbeitsauslastung an einem Arbeitstag und/oder zu dem derzeitigen Zeitpunkt, die erwartete Auslastung zum derzeitigen Zeitpunkt oder dergleichen.

Diese Kontextinformationen I werden dem Korrelationsmodul 52 von externen Datenquellen 58 übermittelt, die mit dem Korrelationsmodul 52 zum Datenaustausch, insbesondere über das Internet, verbunden sind.

Die externen Datenquellen 58 können das Leitsystem 20, ein Warenwirtschaftssystem, ein Enterprise Resources Management System, eine Maschinensteuerung 62 einer Maschine 60 des Systems 12, insbesondere des Arbeitssystems 14, ein Mobile-Device-Management-System (MDM), eine Datenbank eines externen Datenanbieters und/oder öffentlich abrufbare Datenquellen, wie von Behörden, sein.

Die Maschine 60 ist beispielsweise ein Industrieroboter (Fig. 1) oder Förderband, der bzw. das insbesondere in der Halle 10 angeordnet ist.

Denkbar ist auch, dass eines oder mehrere Verbindungsgeräte 22 selbst einen Teil des Korrelationsmoduls 52 bilden und dementsprechend die im Folgenden beschriebenen Funktionen zumindest teilweise durchführen.

Es ist somit denkbar, dass die Verbindungsgeräte 22 eine Doppelfunktion oder sogar einer Dreifachfunktion haben, wenn sie Sensordaten D erheben und Ereignisdatenpakete E erstellen, die Sensorvorrichtung 24 ähnlich wie das Leitsystem 20 steuern und zudem als Teil des Korrelationsmoduls 52 fungieren.

Das Korrelationsmodul 52 korreliert im Folgenden die Informationen der Ereignisdatenpakete E mit den Kontextinformationen I, wodurch die Ereignisdatenpakete E, insbesondere die Sensordaten D mithilfe der Kontextinformationen I in einen größeren Zusammenhang gesetzt werden können.

Hierzu weist das Korrelationsmodul ein Maschinenlernmodul M1 auf. Das Maschinenlernmodul M1 des Korrelationsmoduls 52 ist oder umfasst beispielsweise ein künstliches neuronales Netzwerk, einen Decision Tree, einen statistischen Algorithmus, einen Clusteralgorithmus, ein Modul zur Textgenerierung und/oder eine Principal Component Analysis. Im Falle eines künstlichen neuronalen Netzwerks ist dieses mithilfe von Trainingsdaten trainiert, die Eingangsdaten für verschiedene Situationen und Informationen über die erwartete und korrekte Ausgabe des künstlichen neuronalen Netzwerks auf Grundlage der Eingangsdaten enthält. Der Ablauf des Trainings wird später beschrieben.

Die Trainingsdatensätze für das Maschinenlernmodul M1 des Korrelationsmodules 52 enthalten als Eingangsdaten Ereignisdatenpakete E sowie Kontextinformationen I und als Informationen über die korrekte Ausgabe die zugehörigen Kontextdatensätze K.

Mittels des Maschinenlernmoduls M1 korreliert das Korrelationsmodul 52 die Ereignisdatenpakete E mit den Kontextinformationen und erzeugt Kontextdatensätze K. Beispielsweise wird die Korrelation zwischen den Ereignissen Datensätzen E und den Kontextinformationen I mittels des Zeitstempels (den auch die Kontextinformationen aufweisen können), zumindest einem gemeinsamen Identifikator, wie dem Identifikator der Sensorvorrichtung 24, dem Identifikator des Verbindungsgerätes 22, dem Identifikator des Benutzers W oder einem Identifikator des Prozessschritts korreliert.

Der Identifikator des Benutzers kann beispielsweise dadurch gewonnen werden, dass dem Überwachungssystems 16 bekannt ist, welcher Benutzer W welches Verbindungsgerät 22 oder welche Sensorvorrichtung 24 verwendet, da sich dieser zuvor anmelden oder authentifizieren musste.

Auch können die verschiedenen Prozessschritte zur einfachen Verarbeitung einen Identifikator aufweisen.

Insbesondere die Korrelation über den Zeitstempel ist bei sehr allgemeinen Kontextinformationen I einfach zu realisieren, wie Angaben über das Wetter und/oder die Temperatur der Arbeitsumgebung.

Auch kann das Korrelationsmodul 52 mittels der Kontextinformation I des Analysemoduls 54, d.h. mittels der Angaben, die das Ereignisdatenpaket E einem Ereignis, einer Tätigkeit, einem Ort und/oder einem Gegenstand zuordnet, einen Kontextdatensatz K erzeugen.

Der Kontextdatensatz K beschreibt somit einen Moment oder Abschnitt der vom Benutzer W mit dem Arbeitssystem 14 durchgeführten Tätigkeit, insbesondere den ausgeführten Prozess äußerst umfassend, zum Beispiel beginnend von den zu diesem Moment erzeugten Sensordaten D und Informationen, wie diese Sensordaten D erzeugt wurden - enthalten als Situationsangaben A im Ereignisdatenpaket E - bis hin zu weitergehenden, teilweise allgemeinen Informationen zu den Umständen oder der Einordnung im gesamten Prozess anhand der Kontextinformationen I.

Insbesondere habe die Kontextdatensätze K, unabhängig von ihrer Quelle oder ihres Inhaltes, einen identischen Aufbau und/oder eine identische Struktur, wodurch sie einfach durch ein Maschinenlernmodul, insbesondere einem künstlichen neuronalen Netzwerk, weiterverarbeitet werden können.

Als einfaches Beispiel kann jeder Kontextdatensatz K einen Zeitpunkt, eine Tätigkeit und einen Benutzer angeben, der diese Tätigkeit ausgeführt hat, in einem für jeden Kontextdatensatz K gleichen Datenformat. Dabei ist es für das Format des Kontextdatensatzes K unerheblich, von welcher Quelle das Ereignisdatenpaket E und die Kontextinformation I stammen.

Auf diese Weise kann ein einheitlicher Zeitstrahl von Ereignissen bzw. Tätigkeiten ermittelt werden, obwohl die Tätigkeiten mit unterschiedlichen Typen von Sensorvorrichtungen 24 durchgeführt oder aufgenommen werden.

Denkbar ist, dass die Kontextinformationen I durch einen Benutzer des Arbeitssystems 14, insbesondere einer Aufsichtsperson des Arbeitssystems 14, wie eines Vorarbeiters oder Schichtplaners, dahingehend bewertet werden, ob bzw. in welchem Maße diese Kontextinformationen I für das Arbeitssystem 14 relevant sind.

Diese Bewertung wird dem Korrelationsmodul 52 als Rückmeldung übermittelt und das Korrelationsmodul 52 berücksichtigt die rückgemeldete Relevanz bei der Erstellung des entsprechenden Kontextdatensatzes K. Zum Beispiel ändert das Korrelationsmodul 52 die Gewichtung der Kontextinformationen I anhand der Rückmeldung oder wählt andere Kontextinformationen I zur Erzeugung des Kontextdatensatzes K aus. Beispielweise können bestimmte Kontextinformationen I bei geringer rückgemeldeter Relevanz gänzlich unberücksichtigt bleiben.

Die auf diese Weise erzeugten Kontextdatensätze K werden an das Analysemodul 54 des Überwachungssystems 16 übermittelt.

Gleichzeitig können die Kontextdatensätze K in dem Datenspeicher 57 des Überwachungssystems 16 abgelegt werden, um zu einem späteren Zeitpunkt als Kontextdatensätze K der Vergangenheit verwendet zu werden. Auf den Datenspeicher 57 hat das Analysemodul 54 Zugriff.

Der Datenspeicher 57 kann Teil des Korrelationsmoduls 52, das Analysemodul 54 oder des Verteilungsmoduls 56 sein.

Ebenfalls können die Ereignisdatenpakete E an das Analysemodul 54 übermittelt werden und/oder im Datenspeicher 57 des Überwachungssystems 16 abgelegt werden, um zu einem späteren Zeitpunkt als Kontextdatensätze K der Vergangenheit verwendet zu werden. Auf den Datenspeicher 57 hat das Analysemodul 54 Zugriff.

Das Analysemodul 54 kann basierend auf dem Ereignisdatenpaket E und den Ereignisdatenpakete E der Vergangenheit das aktuelle Ereignisdatenpaket E einem Ereignis, einer Tätigkeit, einem Ort und/oder einem Gegenstand zuordnen.

Unter einem Ereignis, einer Tätigkeit, einem Ort und/oder einem Gegenstand werden dabei sowohl spezifische Ereignisse, Tätigkeiten, Orte und/oder Gegenstände verstanden, wie "Regal 5" oder "Aufnehmen der Windschutzscheibe", als auch Kategorien von Ereignissen, Tätigkeiten, Orten und/oder Gegenständen, wie "Regal" oder "Aufnehmen eines Bauteils".

Hierzu kann das Analysemodul 54 anhand der Ereignisdatenpakete E der Vergangenheit anhand der Häufigkeit, der Zeitpunkte und/oder des Umfelds (d.h. weiterer Ereignisdatenpakete E in kurzen zeitlichen Zusammenhang), in denen ähnliche Ereignisdatenpakete E in der Vergangenheit auftraten, auf das Ereignis, die Tätigkeit, den Ort und/oder den Gegenstand schließen, das bzw. der dem aktuellen Ereignisdatenpaket zuzuordnen ist.

Auch ist es denkbar, dass das aktuelle Ereignisdatenpaket E als Sensordaten eine Bilddatei und/oder die Aufzeichnung einer Bewegung enthält und das Analysemodul 54 durch Mustererkennung in der Bilddatei und/oder Aufzeichnung der Bewegung das Ereignis, die Tätigkeit, den Ort und/oder den Gegenstand ermittelt, der dem aktuellen Ereignisdatenpaket E zuzuordnen ist.

Beispielweise wird vom Analysemodul 54 eine Wahrscheinlichkeit ermittelt, die angibt, ob die Zuordnung des Ereignisdatenpaktes E zu dem Ereignis, der Tätigkeit, dem Orts und/oder dem Gegenstand korrekt ist.

Das ermittelte Ereignis, Tätigkeit, Ort und/oder Gegenstand und ggf. der Wert der Wahrscheinlichkeit werden als Kontextinformation I zu dem jeweiligen Ereignisdatenpaket E an das Korrelationsmodul 52 übermittelt.

Um diese Kontextinformationen I zu ermitteln, kann das Analysemodul 54 ein Kontextmaschinenlernmodul MK aufweisen, das beispielsweise ein künstliches neuronales Netzwerk, einen Decision Tree, einen statistischen Algorithmus, einen Clusteralgorithmus, ein Modul zur Textgenerierung und/oder eine Principal Component Analysis ist oder umfasst. Im Falle eines künstlichen neuronalen Netzwerks ist dieses mithilfe von Trainingsdaten trainiert, die Eingangsdaten für verschiedene Situationen und Informationen über die erwartete und korrekte Ausgabe des künstlichen neuronalen Netzwerks auf Grundlage der Eingangsdaten enthält. Der Ablauf des Trainings wird später beschrieben.

Die Trainingsdatensätze für das Kontextmaschinenlernmodul MK des Analysemodul 54 enthalten beispielsweise einen Satz an Ereignisdatenpaketen E und optional Ereignisdatenpakete E der Vergangenheit, und als Informationen über die korrekte Ausgabe die erwarteten Kontextinformationen I.

Das Kontextmaschinenlernmodul MK bzw. der Teil des Analysemoduls 54, der die Kontextinformationen I ermittelt, kann auch getrennt vom Analysemodul 54 ausgeführt sein, beispielsweise als Teil des Korrelationsmoduls 52 oder als separates Kontextmodul.

Basierend auf den Kontextdatensätzen K, insbesondere ausschließlich basierend auf den Kontextdatensätzen K, erstellt das Analysemodul 54 nun einen Bericht B über den Zustand des Arbeitssystems 14 und/oder über die Abweichungen vom bisherigen Betriebsablauf des Arbeitssystems 14.

Zu Erstellung des Berichts B zieht das Analysemodul 54 eine Vielzahl an Kontextdatensätze K heran, die jeweils auf Ereignisdatenpaketen E basieren, die von verschiedenen Sensorvorrichtungen 24 erzeugt wurden, insbesondere von Sensorvorrichtungen 24 von verschiedenen Benutzern W, an verschiedenen Arbeitsstationen 18 und/oder bei verschiedenen Tätigkeiten durchgeführt wurden.

Unter dem Betriebsablauf werden dabei die tatsächlichen Tätigkeiten und Handlungen der Benutzer W verstanden, beispielsweise in der Art und Weise, wie der Prozess durchgeführt wird. Es ist durchaus möglich, dass der gleiche Prozess oder zumindest einzelne Prozessschritte auf zwei verschiedene Weisen (also durch zwei verschiedene Betriebsabläufe) durchgeführt werden können.

Auch umfassen Betriebsabläufe Fehler und Ineffizienzen in den Tätigkeiten, die im Prozess nicht vorgesehen sind.

Dabei können aktuelle Kontextdatensätze K verwendet werden, die innerhalb einer vorbestimmten Zeitspanne, beispielsweise der letzten halben Stunde oder des aktuellen Arbeitstages an das Analysemodul 54 übermittelt wurden. Denkbar ist auch, dass das Analysemodul 54 auf die im Datenspeicher 57 abgelegten Kontextdatensätze K der Vergangenheit zurückgreift.

Auch kann das Analysemodul 54 auf vergangene Berichte B zugreifen.

Die Ergebnisse und/oder Datenrepräsentationen der Maschinenlernmodule M1 bis M6 sowie MK können auch als historische Ergebnisse und/oder Datenrepräsentationen im Datenspeicher 57 abgespeichert werden, um sie später als Referenz oder anderweitig zu verwenden, beispielsweise von anderen Teilen des Analysemoduls 54.

Hierzu weist das Analysemodul 54 ein erstes Maschinenlernmodul M2 auf, das beispielsweise ein künstliches neuronales Netzwerk, einen Decision Tree, einen statistischen Algorithmus, einen Clusteralgorithmus, ein Modul zur Textgenerierung und/oder eine Principal Component Analysis ist oder umfasst. Im Falle eines künstlichen neuronalen Netzwerks ist dieses mithilfe von Trainingsdaten trainiert, die Eingangsdaten für verschiedene Situationen und Informationen über die erwartete und korrekte Ausgabe des künstlichen neuronalen Netzwerks auf Grundlage der Eingangsdaten enthält. Der Ablauf des Trainings wird später beschrieben.

Die Trainingsdatensätze für das erste Maschinenlernmodul M2 des Analysemodul 54 enthalten beispielsweise einen Satz an Kontextdatensätzen K, optional Kontextdatensätze K der Vergangenheit und/oder alte Berichte B, und als Informationen über die korrekte Ausgabe die erwarteten Berichte B passend zu den Kontextdatensätzen K.

Zur Erstellung des Berichtes B ermittelt das Analysemodule 54 beispielsweise zunächst den Zustand des Arbeitssystems 14 und den bisherigen Betriebsablauf.

Anhand der Kontextdatensätze K kann das Analysemodul zum Beispiel den Aufbau des Arbeitssystems 14 ermitteln. So kann die Anzahl und die Lage der Arbeitsstationen 18 anhand von Ortsdaten bestimmt werden.

Auch können die an den jeweiligen Arbeitsstationen 18 durchgeführten Tätigkeiten bestimmt werden, beispielsweise mittels der Daten der Beschleunigungssensoren, Bilder der Kameras oder Werten der dort eingelesenen Barcodes.

Die Lage der Arbeitsstationen 18 untereinander kann auch relativ zueinander angegeben werden, zum Beispiel als Abstand zweier Arbeitsstationen 18 in Schritten.

Neben den oder anstelle der Arbeitsstationen 18 können auch beliebige andere Orte des Arbeitssystems, wie Türen und Tore erfasst werden.

Auch der Zustand der einzelnen Komponenten des Arbeitssystems 14, beispielsweise der Sensorvorrichtungen 24, der Verbindungsgeräte 22 oder der Gateways 50 können als Teil des Zustands des Arbeitssystems 14 vom Analysemodul 54 ermittelt werden.

Hierzu gehören beispielsweise die Entladegeschwindigkeit des Akkumulators oder einer Batterie der Sensorvorrichtungen 24, die Akku- oder Batterielebenszeit hiervon, vermutete Beschädigungen aufgrund von starken Beschleunigungen oder dergleichen. Auch Angaben über die Softwareversionen der Sensorvorrichtungen 24 oder der Verbindungsgeräte 22 sowie Information zum Ladeverhalten der Sensorvorrichtungen 24 können zum ermittelten Zustand zählen.

Auch die Betriebsabläufe im Arbeitssystem 14, wie die an bestimmten Orten vorgenommenen Tätigkeiten, die Aufteilung der Tätigkeiten in kleinere Schritte, die Reihenfolge der Tätigkeiten und dergleichen können anhand der Kontextdatensätze K vom Analysemodul 54 bestimmt werden.

Anhand der Betriebsabläufe kann das Analysemodul 54 auch der mit dem Arbeitssystems 14 durchgeführte Prozess ermitteln. Hierbei ist es möglich, dass das Analysemodul 54 auch die einzelnen Prozessschritte des Prozesses, die Reihenfolge der einzelnen Prozessschritte des Prozesses, die Länge der einzelnen Prozessschritte, den Prozessbeginn und/oder das Prozessende ermittelt, insbesondere allein anhand der Kontextdatensätze K.

Auch die Auslastung des Arbeitssystems 14, insbesondere der einzelnen Sensorvorrichtungen 24, beispielsweise anhand der Anzahl an ausgelösten Messungen mittels des Sensors 28 kann Teil der von dem Analysemodul 54 gewonnenen Informationen sein.

Bei der Verwendung von Sensorvorrichtungen 24 mit Barcodelesern als Sensoren 28, können die Art der eingelesenen Barcodes (auch als "Symbology" bezeichnet) ermittelt werden, ebenso wie die Dauer eines Einlesevorgangs, der Erfolg eines Einlesevorgangs, die Erfolgsquote von Einlesevorgängen, die Anzahl an Schritten zwischen zwei Einlesevorgängen oder die Veränderung des Ortes zwischen zwei Einlesevorgängen.

Sowohl der ermittelte Zustand des Arbeitssystems 14, wie der Aufbau des Arbeitssystems 14 als auch die bisherigen Betriebsabläufe und Prozesse sowie alle vom Analysemodul 54 gewonnen Informationen können von dem Analysemodul 52 im Datenspeicher 57 zur späteren Verwendung abgelegt werden.

Die im Datenspeicher 57 abgelegten Informationen und Betriebsabläufe werden vom Analysemodul 54 zum Beispiel verwendet, um Abweichungen im Betriebsablauf zu erkennen.

Auch kann das Analysemodul 54 auf vergangene Berichte B und Ergebnisse von historischen Analysen, die von den Maschinenlernmodulen M1 bis M6 sowie MK generiert wurden, zugreifen. Beispielsweise können historische Sensordaten (z.B. Barcodes) verwenden werden, um über Vektoren Wahrscheinlichkeitsvoraussagen über die Bedeutung gleicher Barcodes (z.B. Barcode stellt einen Ort in Lagerhalle dar oder Barcode stellt eine Produktgruppe dar) in der Zukunft treffen zu können. Hierbei kommen zum Beispiel bedingte Wahrscheinlichkeiten zum Einsatz.

Hierzu wird beispielsweise der vom Analysemodul 54 aufgrund aktueller Kontextdatensätze K ermittelte Betriebsablauf mit einem vorherigen Betriebsablauf verglichen, der im Datenspeicher 57 abgelegt wurde. Abweichungen zum bisherigen Betriebsablauf ergeben sich aus diesem Vergleich.

Abweichungen im Betriebsablauf können zum Beispiel darauf zurückzuführen sein, dass sich Benutzer W anders Verhalten oder - falls in den Kontextinformationen I keine Informationen zum Prozess erhalten werden - sich der Prozess geändert hat.

Alle Informationen, die das Analysemodul 54 ermittelt, können Teil des Berichtes W sein.

Der Bericht B kann textuelle Informationen, numerische Informationen und/oder graphische Komponenten enthalten, die beispielsweise den Aufbau des Arbeitssystem 14 visualisieren.

Der Bericht B über den Zustand des Arbeitssystems 14 enthält zum Beispiel die Angaben über den Aufbau des Arbeitssystems 14, insbesondere Angaben zu den stationären Arbeitsstationen 18, deren Lage in der Halle 10 und/oder die Lage der Arbeitsstationen 18 relativ zueinander. Gegebenenfalls kann auch nur die Entfernung, beispielsweise in Schritten, zwischen den Arbeitsstationen 18 angegeben werden. Neben den oder anstelle der Arbeitsstationen 18 können auch beliebige andere Orte des Arbeitssystems, wie Türen und Tore erfasst werden.

Auch der Zustand der einzelnen Komponenten des Arbeitssystems 14, beispielsweise der Sensorvorrichtungen 24, der Verbindungsgeräte 22 oder der Gateways 50 kann Teil eines Berichtes B sein, wie die Entladegeschwindigkeit des Akkumulators oder einer Batterie der Sensorvorrichtungen 24, die Akku- oder Batterielebenszeit hiervon, vermutete Beschädigungen aufgrund von starken Beschleunigungen, oder dergleichen.

Ebenso der mit dem Arbeitssystems 14 durchgeführte Prozess kann Teil des Berichtes sein, den das Analysemodul 54 anhand der Kontextdatensätze K ermittelt hat. Hierbei ist es möglich, dass das Analysemodul 54 auch die einzelnen Prozessschritte des Prozesses, die Reihenfolge der einzelnen Prozessschritte des Prozesses, die Länge der einzelnen Prozessschritte, den Prozessbeginn und/oder das Prozessende allein anhand der Kontextdatensätze K ermitteln kann und somit Teil des Berichts B werden.

Auch die Auslastung des Arbeitssystems 14, insbesondere der einzelnen Sensorvorrichtungen 24, beispielsweise anhand der Anzahl an ausgelösten Messungen mittels des Sensors 28 kann Teil des Berichtes sein.

Bei der Verwendung von Barcodelesern als Sensoren 28, können die Art der eingelesenen Barcodes Teil des Berichts B, die Dauer eines Einlesevorgangs, der Erfolg eines Einlesevorgangs, die Erfolgsquote von Einlesevorgängen, die Anzahl an Schritten zwischen zwei Einlesevorgängen und/oder die Veränderung des Ortes zwischen zwei Einlesevorgängen sein.

Bildlich gesprochen kann der Bericht B über den Zustand des Arbeitssystems 14 sowohl zum einen Informationen zum grundlegenden Aufbau des Arbeitssystems 14 enthalten, beispielsweise ähnlich zu Schalt- oder Bauplänen von Industrieanlangen. Gleichzeitig kann der Zustand oder die Auslastung des Arbeitssystems im Bericht B enthalten sein, ähnlich den Berichten, die in Leitwarten zur Überwachung von Industrieanlagen verwendet werden.

Der Bericht B über den Zustand des Arbeitssystems 14 kann auch den Betriebsablauf, d. h. die Umsetzung des durchzuführenden Prozesses enthalten.

Der Bericht B kann auch ein Bericht über Abweichungen vom bisherigen Betriebsablauf sein, beispielsweise wenn festgestellt wurde, dass es Abweichungen in einzelnen Prozessschritten oder Abläufen kommt, die in der Vergangenheit nicht aufgetreten sind, obwohl der Prozess des Arbeitssystems 14 eigentlich unverändert ist.

Beispielsweise enthält der Bericht Angaben über Sensorvorrichtungen 24 mit weniger oder mehr ausgeführten Prozessschritten oder Einlesevorgängen als in vorherigen Betriebsabläufen, Änderungen im Aufbau des Arbeitssystems 14, insbesondere von stationären Arbeitsstationen 18 des Arbeitssystems. Auch Änderungen der Auslastung des Arbeitssystems 14, insbesondere der Sensorvorrichtungen 24 sind als Abweichungen vom vorherigen Betriebsablauf anzusehen.

Auch ist es denkbar, dass sich der Prozess geändert hat, der mit dem Arbeitssystems 14 durchgeführt wird, was auch eine Abweichung vom bisherigen Betriebsablauf, d. h. eigentlichen Tätigkeiten der Benutzer W in der Halle 10 darstellt. Die Änderungen des wenigstens einen Prozesses können insbesondere die Änderungen einzelner Prozessschritte, der Reihenfolge einzelner Prozessschritte Änderungen der Länge einzelner Prozessschritte, Änderung des Prozessbeginns und/oder Änderungen des Prozessendes sein.

Auch ist es denkbar, dass Abweichungen vom vorherigen Betriebsablauf nicht nur zeitlich zu sehen sind, sondern auch örtlich. Wenn beispielsweise an zwei Arbeitsstationen 18 die gleichen Prozesse bzw. die gleichen Prozessschritte des Prozesses durchgeführt werden, die Betriebsabläufe der beiden Arbeitsstationen 18 jedoch unterschiedlich sind, kann dies eine Angabe im Bericht B sein.

Auch kann der Bericht B über Abweichungen und Unterschiede zu Industriereferenzwerten aufzeigen.

Zur Erstellung des Berichtes B kann eine Berichtvorlage V verwendet werden.

Eine Berichtvorlage V enthält beispielsweise Anweisungen für das Analysemodul 54, wie anhand der Kontextdatensätze K der der Berichtvorlage V zugeordnete Bericht B zu erzeugen ist.

Die Berichtvorlage V kann auch eine Vorgabe zur Wiedergabe des Berichtes B enthalten. Diese Vorgabe kann beispielsweise sein, auf welchem Gerät der Bericht anzuzeigen ist, die Darstellungsweise in der der Bericht B anzuzeigen ist und/oder die Zeit, zu der der Bericht B anzuzeigen ist.

Dies kann dadurch geschehen, dass die Berichtvorlage V die für den Bericht B benötigten Eingangsdaten, d.h. Kontextdatensätze K mit spezifischen Sensordaten D, definiert, sodass das Analysemodul 54 nur solche Kontextdatensätze mit ebendiesen Sensordaten D zur Erstellung des Berichtes B heranzieht.

Auch kann die Berichtsvorlage zumindest einen Auswerteschritt angeben, wie anhand der Eingangsdaten der Zustand des Systems, der bisherigen Betriebsablauf und/oder Abweichungen vom bisherigen Betriebsablauf zu ermitteln ist.

Hierzu kann die Berichtvorlage V auch angeben, aus welcher Quelle die Eingangsdaten beziehbar sind.

Zudem kann eine Berichtvorlage V wenigstens eine Signifikanzbedingung enthalten, die erfüllt sein muss, damit das Analysemodul 54 einen Bericht B anhand dieser Berichtsvorlage V erzeugt. Die Signifikanzbedingung bezieht sich auf die Kontextdatensätze K und kann somit vom Analysemodul 54 anhand der Kontextdatensätze K überprüft werden.

Die Signifikanzbedingung gibt beispielsweise an, wie viele Kontextdatensätze K, die als Grundlage für diesen spezifischen Bericht B dienen können, vorhanden sein müssen. Auf diese Weise kann verhindert werden, dass Berichte B erstellt werden, die keine Aussagekraft haben, da die statistische Grundgesamtheit auf dem sie beruhen würden, zu klein wäre.

Zur Erstellung eines Berichtes B wählt das Analysemodul 54 eine Berichtvorlage aus. Hierzu sind die Berichtvorlagen V beispielsweise im Datenspeicher 57 oder im Analysemodul 54 hinterlegt.

Denkbar ist auch, dass das Analysemodul 54 eine Berichtvorlage V generiert, beispielsweise anhand von Kontextdatensätzen K aus der Vergangenheit und aktuellen Kontextdatensätzen K mittels eines zweiten Maschinenlernmoduls M3 des Analysemodul 54.

Das zweite Maschinenlernmodul M3 des Analysemoduls 54 ist oder umfasst beispielsweise ein künstliches neuronales Netzwerk, einen Decision Tree, einen statistischen Algorithmus, einen Clusteralgorithmus, ein Modul zur Textgenerierung und/oder eine Principal Component Analysis. Im Falle eines künstlichen neuronalen Netzwerks ist dieses mithilfe von Trainingsdaten trainiert, die Eingangsdaten für verschiedene Situationen und Informationen über die erwartete und korrekte Ausgabe des künstlichen neuronalen Netzwerks auf Grundlage der Eingangsdaten enthält. Der Ablauf des Trainings wird später beschrieben.

Die Trainingsdatensätze für das zweite Maschinenlernmodul M3 des Analysemoduls 54 enthalten als Eingangsdaten Kontextdatensätze K, die sowohl aktuelle als auch Kontextdatensätze K aus der Vergangenheit darstellen können, und als Informationen über die korrekte Ausgabe die dazu passenden Berichtvorlage V.

Anhand der ausgewählten oder generierten Berichtvorlage V wird dann durch das Analysemodul 54, insbesondere dem ersten Maschinenlernmodul M2 des Analysemoduls 54 der entsprechende Bericht B erzeugt.

Denkbar ist auch, dass mehrere Berichtvorlagen V gewählt oder generiert werden und für jede Berichtvorlage, sofern die Signifikanzbedingung erfüllt ist, ein Bericht B erstellt wird. Anschließend wird die Relevanz jedes der erstellten Berichte B bewertet.

Die Relevanz des Berichtes B kann beispielsweise durch das Analysemodul 54 selbst bewertet werden.

Hierzu kann das Analysemodul 54 ein drittes Maschinenlernmodul M4 aufweisen. Dieses Maschinenlernmodul M4 kann neben den Berichten B insbesondere auch auf Rückmeldungen des Benutzers, insbesondere der Aufsichtsperson, oder anderen Benutzern anderer Arbeitssysteme zurückgreifen.

Insbesondere kann das dritte Maschinenlernmodul M4 sich stetig verbessern, in dem es Rückmeldungen von Benutzern W, die Bericht angezeigt bekommen haben, insbesondere von Aufsichtspersonen, auswertet und die Bewertung der Relevanz für zukünftige Berichte anhand der Rückmeldung anpasst.

Das dritte Maschinenlernmodul M4 des Analysemoduls 54 ist oder umfasst beispielsweise ein künstliches neuronales Netzwerk, einen Decision Tree, einen statistischen Algorithmus, einen Clusteralgorithmus, ein Modul zur Textgenerierung und/oder eine Principal Component Analysis. Im Falle eines künstlichen neuronalen Netzwerks ist dieses mithilfe von Trainingsdaten trainiert, die Eingangsdaten für verschiedene Situationen und Informationen über die erwartete und korrekte Ausgabe des künstlichen neuronalen Netzwerks auf Grundlage der Eingangsdaten enthält. Der Ablauf des Trainings wird später beschrieben.

Die Trainingsdatensätze für das dritte Maschinenlernmodul M4 des Analysemoduls 54 enthalten als Eingangsdaten Berichte B und Rückmeldungen von Benutzern oder Aufsichtspersonen zu diesen Berichten B, und als Informationen über die korrekte Ausgabe die Relevanz des Berichts B.

Anschließend wird aus den erstellten Berichten B nur eine vorbestimmte Anzahl an Berichten B ausgewählt und weiterverwendet, nämlich diejenigen Berichte, die die höchste Relevanz haben. Beispielsweise wird lediglich ein einziger Bericht B, nämlich der mit der höchsten Relevanz, weiterverwendet.

Der auf diese Weise erhalten Bericht B oder die auf diese Weise erhaltenen Berichte B können nun zur Dokumentation oder Auswertung übermittelt werden, beispielsweise an das Leitsystem 20, ein Warenwirtschaftssystem oder ein ERP.

Denkbar ist auch, dass der Bericht an ein mobiles Endgerät, einen Arbeitsplatzcomputer und/oder eine andere Ausgabevorrichtung übermittelt wird, um den Bericht anzuzeigen.

Das mobile Endgerät, der Arbeitsplatzcomputer und/oder die andere Ausgabevorrichtung gehören zu einer Aufsichtsperson, wie einem Vorarbeiter oder einem Schichtleiter des Arbeitssystems 14. Die Übermittlung kann dabei per E-Mail, RSS Feed, API-Zugriff oder dergleichen geschehen.

Das mobile Endgerät kann beispielsweise ein Smart Device, wie ein Smartphone, ein Tablet, eine SmartWatch oder eine Smart Glass sein. Auch ein Headset oder ein anderer Kopfhörer zur akustischen Ausgabe ist als mobiles Endgerät denkbar.

Auf diese Weise ist es für die Aufsichtsperson möglich, den Zustand des Arbeitssystems 14 sowie etwaige Abweichungen im Betriebsablauf zu überwachen und Gegenmaßnahmen einzuleiten. Auch hier bestehen Analogien zu Industrieanlagen, die in einer Leitwarte überwacht werden.

Neben dem Bericht kann das Analysemodul 54 außerdem eine Systemverbesserung C ermitteln. Die Systemverbesserung C kann auf Basis der Kontextdatensätze K, insbesondere aktueller Kontextdatensätze K und Kontextdatensätze K der Vergangenheit, sowie von Berichten B ermittelt werden.

Eine Systemverbesserung kann dabei eine Maßnahme sein, wie das Arbeitssystems 14, beispielsweise dessen Aufbau oder der damit durchgeführte Prozess, verändert werden kann, um Verbesserungen herbeizuführen. Dabei kann das Arbeitssystems 14 in Bezug auf die Effizienz und/oder die Auslastung verbessert werden.

Zur Ermittlung der Systemverbesserung C kann das Analysemodul 54 ein viertes Maschinenlernmodul M5 aufweisen. Das vierte Maschinenlernmodul M5 des Analysemoduls 54 ist oder umfasst beispielsweise ein künstliches neuronales Netzwerk, einen Decision Tree, einen statistischen Algorithmus, einen Clusteralgorithmus, ein Modul zur Textgenerierung und/oder eine Principal Component Analysis. Im Falle eines künstlichen neuronalen Netzwerks ist dieses mithilfe von Trainingsdaten trainiert, die Eingangsdaten für verschiedene Situationen und Informationen über die erwartete und korrekte Ausgabe des künstlichen neuronalen Netzwerks auf Grundlage der Eingangsdaten enthält. Der Ablauf des Trainings wird später beschrieben.

Die Trainingsdatensätze für das vierte Maschinenlernmodul M5 des Analysemoduls 54 enthalten als Eingangsdaten Kontextdatensätze K und Berichte B, und als Informationen über die korrekte Ausgabe hierzu passende Systemverbesserungen C.

Beispielsweise enthalten die Systemverbesserungen C eine Maßnahme zur anderen Anordnung von Arbeitsstationen 18, zum Zusammenfassen mehrerer Arbeitsstationen 18 oder das Schließen redundanter Arbeitsstationen 18.

Auch die Verwendung anderer Barcodes im Arbeitssystems 14 oder Barcodes einer anderen Größe können vorgeschlagen werden, zum Beispiel wenn erkannt wurde, dass Lesevorgänge bestimmter Barcodes besonders lange dauern, beispielsweise im Vergleich zu einem Industriereferenzwert.

Die Systemverbesserungen C können beispielsweise bereits in den Berichtvorlagen V enthalten sein und beim Erstellen des Berichtes B aufgrund der entsprechenden Vorlage V ausgewertet werden, beispielsweise aufgrund der Ergebnisse eines in der Berichtvorlage V definierten Auswerteschritts.

Die Systemverbesserung C kann zusammen mit dem Bericht B, wie zum Bericht beschrieben, weitergeleitet und ausgegeben werden.

Die Systemverbesserung C kann jedoch nicht nur ausgegeben werden. Alternativ oder zusätzlich kann die Systemverbesserung C an das Verteilungsmodul 56 des Überwachungssystems 16 übermittelt werden.

Das Verteilungsmodul 56 ermittelt dann basierend auf der Systemverbesserung C, welche Teile des Arbeitssystems 14 zu ändern sind und ergreift entsprechende Maßnahmen.

Beispielsweise ermittelt das Verteilungsmodul 56, welche Sensorvorrichtungen 24 nach der Umsetzung der Systemverbesserung C eine andere Funktion zu erfüllen haben und ermittelt Änderungsbefehle O für diese Sensorvorrichtungen 24.

Die Änderungsbefehle O werden dann mittels des Verbindungsgerätes 22 an die entsprechende Sensorvorrichtung 24 übermittelt. Denkbar ist auch, dass die Änderungsbefehle O an das Leitsystem 20 und von dort an die entsprechenden Sensorvorrichtungen 24 übermittelt werden.

Die entsprechende Sensorvorrichtung 24 erhält den entsprechenden Änderungsbefehl O und setzt den Änderungsbefehl O um.

Beispielsweise enthält der Änderungsbefehl O eine geänderte Konfiguration oder weist die Sensorvorrichtung 24 an, eine andere Konfiguration zu verwenden. Dies wird dann von der Sensorvorrichtung 24 umgesetzt, sodass sich die Funktionsweise der Sensorvorrichtung 24 und damit des Arbeitssystems 14 ändert.

Die geänderte Konfiguration kann zum Beispiel eine Angabe enthalten, in welchem Arbeitsabstand häufig Barcodes mit der Sensorvorrichtung 24 eingelesen werden. Auf diese Weise kann bei Sensorvorrichtungen 24, die einen großen Bereich an möglichen Arbeitsabständen erlauben, bereits der korrekte Arbeitsabstand vor dem Einlesevorgang eingestellt sein. Damit muss die Sensorvorrichtung 24 mit dem Barcodeleser während eines Einlesevorgangs nicht den gesamten Arbeitsbereich abtasten, um einen Barcode einzulesen, wodurch der Einlesevorgang beschleunigt wird.

Denkbar ist auch, dass für verschiedene Ort, an denen mit der gleichen Sensorvorrichtung 24 Barcodes eingelesen werden, verschiedene Arbeitsabstände in der geänderten Konfiguration hinterlegt sind.

Denkbar ist auch, dass das Verteilungsmodul 56 ermittelt, dass ein bestimmter Benutzer W des Arbeitssystems 14 an einem anderen Ort, beispielsweise einer anderen Arbeitsstation 18 eingesetzt werden soll, um die Systemverbesserung C umzusetzen.

In diesem Falle wird ebenfalls ein Änderungsbefehl O an eine Sensorvorrichtung 24 oder ein Verbindungsgerät 22 übermittelt, und zwar das Verbindungsgerät 22 oder die Sensorvorrichtung 24, die derjenige Benutzer W, der seinen Ort ändern soll, aktuell verwendet.

In diesem Falle enthält der Änderungsbefehl O eine Handlungsanweisung für den Benutzer W und wird an die entsprechende Sensorvorrichtung 24 über das Verbindungsgerät 22 übermittelt.

Das Verbindungsgerät 22 und/oder die Sensorvorrichtung 24 des Benutzers, der seinen Ort verändern soll, gibt dann auf Grundlage des erhaltenen Änderungsbefehls O eine Handlungsanweisung an den Benutzer W aus. Dies kann beispielsweise mithilfe des Ausgabemittels 30 der Sensorvorrichtung 24 geschehen. Beispielsweise wird ein entsprechender Text auf dem Smart Device (Verbindungsgerät 22) oder dem Bildschirm des Sensorgerätes 26 (Sensorvorrichtung 24) angezeigt.

Diese Nachricht weist den Benutzer W an, zu einer bestimmten anderen Arbeitsstation 18 zu gehen und dort weiterzuarbeiten.

Gleichzeitig kann die Sensorvorrichtung 24 an die Aufgabe an der neuen Arbeitsstation 18 durch den Änderungsbefehl O angepasst werden, beispielsweise in dem die Konfiguration geändert wird.

In einer anderen Ausführungsform ist es auch möglich, dass das Verteilungsmodul 56 indirekt Einfluss auf die Sensorvorrichtungen 24 nimmt, in dem sie das Leitsystem 20 und/oder das der entsprechenden Sensorvorrichtung 24 zugeordnete Verbindungsgerät 22 mittels eines Änderungsbefehls O oder anderer geeigneter Nachrichten anweist, den der Sensorvorrichtung 24 zugewiesenen Prozess zu verändern.

Denkbar ist auch, dass das Verteilungsmodul 56 den Prozess des Arbeitssystems 14 ändert, beispielsweise durch Ausgabe eines Änderungsbefehls O an das Leitsystem 20.

Um die beschriebenen Funktionen zumindest teilweise zu erfüllen, kann das Verteilungsmodul 56 ein Maschinenlernmodul M6 aufweisen.

Das Maschinenlernmodul M6 des Verteilungsmoduls 56 ist oder umfasst beispielsweise ein künstliches neuronales Netzwerk, einen Decision Tree, einen statistischen Algorithmus, einen Clusteralgorithmus, ein Modul zur Textgenerierung und/oder eine Principal Component Analysis. Im Falle eines künstlichen neuronalen Netzwerks ist dieses mithilfe von Trainingsdaten trainiert, die Eingangsdaten für verschiedene Situationen und Informationen über die erwartete und korrekte Ausgabe des künstlichen neuronalen Netzwerks auf Grundlage der Eingangsdaten enthält. Der Ablauf des Trainings wird später beschrieben.

Die Trainingsdatensätze für das Maschinenlernmodul M6 des Verteilungsmoduls 56 enthält als Eingangsdaten eine Systemverbesserung C, und als Informationen über die korrekte Ausgabe einen Änderungsbefehl O und Adressat, zum Beispiel die genaue Sensorvorrichtung 24, des Änderungsbefehls O.

Mittels des Überwachungssystems 16 ist es somit möglich, ein Arbeitssystem 14 zu überwachen, in dem viele verschiedene Sensorvorrichtungen 24 zum Einsatz kommen, die teilweise, insbesondere überwiegend von Benutzern W getragen und eingesetzt werden.

Das Überwachungssystem 16 ermöglicht dabei insbesondere eine Überwachung des Arbeitssystems 14 ähnlich zu einer Industrieanlage, in der ein vollautomatisierter Prozess stattfindet.

Gleichzeitig ist es auch möglich, dass das Überwachungssystems 16 den Aufbau des Arbeitssystems 14 ermittelt und die mit dem Arbeitssystem 14 durchgeführten Prozesse und Einzelprozessschritte erkennt.

Darüber hinaus ermöglicht das Überwachungssystem 16, das Arbeitssystem 14 zu verbessern, in dem es Systemverbesserungen C erzeugt, wie das Arbeitssystems 14 verbessert werden kann. Diese Systemverbesserungen C können dabei mithilfe des Verteilungsmoduls 56 auch selbstständig umgesetzt werden, in dem die Sensorvorrichtungen 24 entsprechend angesteuert werden. Auf diese Weise entsteht eine Rückwirkung auf die einzelnen Sensorvorrichtungen 24, ähnlich einer Regelung.

Eines, mehrere oder alle der beschriebenen künstlichen neuronalen Netzwerke in den Maschinenlernmodulen M1 bis M6 sowie MK können mittels den beschriebenen Trainingsdaten trainiert werden. Das Training umfasst dabei die folgenden Schritte:
- feed forward der Eingangsdaten durch das künstliche neuronale Netzwerk,
- Bestimmen einer Antwortausgabe des künstlichen neuronalen Netzwerks basierend auf den Eingangsdaten,
- Bestimmen eines Fehlers zwischen der Antwortausgabe des künstlichen neuronalen Netzwerks und der erwarteten korrekten Ausgabe des künstlichen neuronalen Netzwerks; und
- Verändern der Gewichtungsfaktoren des künstlichen neuronalen Netzwerks durch back-propagating des Fehlers durch das künstliche neuronale Netzwerk.

Die verschiedenen Maschinenlernmodule M1 bis M6 sowie MK können als separate Maschinenlernmodule ausgeführt sein oder eine, mehrere oder alle der Maschinenlernmodule M1 bis M6 sowie MK können gemeinsam ausgeführt sein. In diesem Falle können die zwischen den Modulen ausgetauschten Informationen, z.B. die Kontextdatenpakete K, latente Variablen sein.

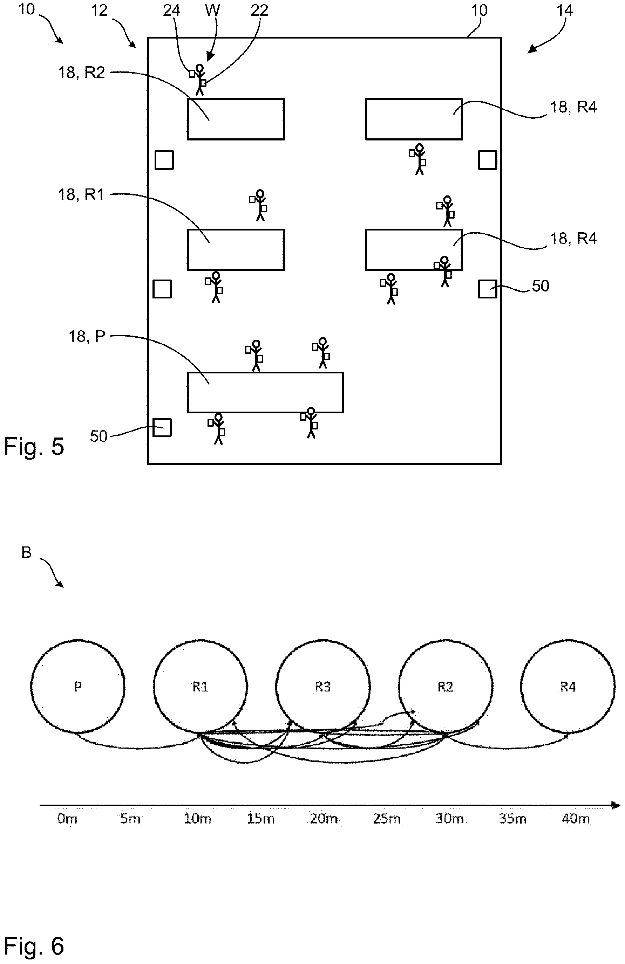

In Figur 5 ist eine zweite Ausführungsform eines erfindungsgemäßen Systems 12 dargestellt, das wieder in einer Halle 10 angeordnet ist. Aus Gründen der Übersicht ist das Überwachungssystem 16 nicht dargestellt.

Das Arbeitssystem 14 des Systems 12 dient in der zweiten Ausführungsform zum Versand von Warensendungen.

Hierzu weist das Arbeitssystem 14 als Arbeitsstationen 18 vier Regale R1, R2, R3, R4, in denen jeweils Waren lagern, sowie eine Packstation P auf, an der die gesammelten Waren zum Versand verpackt werden.

Benutzer W dieses Arbeitssystems 14 haben entweder die Aufgabe, Waren aus den Regalen R1 - R4 zu sammeln und zur Packstation P zu bringen (sogenannte "Picker"). An der Packstation P sind Benutzer W eingeteilt, die die Waren in Kartons verpacken (sog. "Packer").

Dementsprechend unterscheiden sich die Prozessschritte, die von den verschiedenen Benutzern W auszuführen sind, sodass auch die Konfigurationen der Sensorvorrichtungen 24, insbesondere der Sensorgeräte 26 unterschiedlich sind

Ein Benutzer W, der als Picker arbeitet, startet an der Packstation P und erhält einen Auftrag, einige waren aus den Regalen R1 - R4 zu sammeln.

Hierzu wird sein Sensorgerät 26 derart vom Leitsystem 20 angesteuert, dass er angewiesen wird, zu einem bestimmten der Regale R1 - R4 zu gehen, um dort die gesuchte Ware zu entnehmen. Diese Anweisungen erhält er beispielsweise über das Ausgabemittel 30 seiner Sensorvorrichtung 24, wie dem Bildschirm des Sensorgeräts 26.

Zu Beginn jedes Gangs zum Sammeln von Waren, liest der Benutzer W mit dem Sensor 28 einen Barcode, RFID, Benutzerinput etc. an der Packstation P ein, der dort befestigt ist.

An einem der Regale R1 - R4 angekommen liest er mittels des Sensors 28 des Sensorgerät 26 einen an dem entsprechenden Regal R1 - R4 befestigten Barcode ein, der dieses Regal identifiziert.

Anschließend entnimmt der Benutzer W die gesuchte Ware und liest den auf der Ware befindlichen Barcode ein.

Daraufhin erhält er vom Leitsystem 20 eine Anweisung, zu einem weiteren der Regale R1 - R4 zu gehen, um dort eine weitere Ware einzusammeln.

Diese Anweisungen wiederholen sich, bis der Benutzer W schließlich alle gesuchten Waren eingesammelt hat und diese zur Packstation P bringt. Dort liest er wieder den Barcode ein, der fix an der Packstation P befestigt ist.

Bei diesem Ablauf erzeugt die Sensorvorrichtung 24 bei jedem Einlesevorgang einen Wert bzw. eine Zeichenkette, der bzw. die im Barcode codiert ist. Der Wert bzw. die Zeichenkette wird als Sensordaten D an das Leitsystem 20 übermittelt. Zur Vereinfachung wird im Folgenden weiterhin von "Barcode" gesprochen. Zudem wird in diesem Beispiel auch jedes Mal wenigstens ein Ereignisdatenpaket E erzeugt und an das Korrelationsmodul 52 des Überwachungssystems 16 übermittelt.

Außerdem wurden während des Gangs des Benutzers W seine Schritte mithilfe eines Beschleunigungssensors als Sensor 28 seiner Sensorvorrichtung 24 gezählt.

In diesem Ausführungsbeispiel stellt das Einlesen eines Barcodes, der fest an der Packstation P oder einem der Regale R1 - R4 befestigt ist, einen Ereigniszeitpunkt in Bezug auf die getätigten Schritte dar.

Zu jedem dieser Ereigniszeitpunkte erstellt die Sensorvorrichtung 24 ein Ereignisdatenpakten E, das als Sensordaten die Anzahl der Schritte seit dem letzten Ereigniszeitpunkt enthält, also dem letzten Einlesen eines Barcodes, der fest an der Packstation P oder einem der Regale R1 - R4 befestigt ist. Das Ereignisdatenpaket E wird an das Korrelationsmodul 52 und das Analysemodul 54 übermittelt.

Das Analysemodul 54 übermittelt, beispielsweise mittels des Kontextmaschinenlernmoduls MK, die Kontextinformation I, ob das Ereignisdatenpaket E bzw. der in dem Ereignisdatenpaket E enthaltene Barcode einem der Regale R1-R4 oder der Packstation oder einer Ware zuzuordnen ist.

Beispielsweise erkennt das Analysemodul 54 anhand von Ereignisdatenpaketen E der Vergangenheit, dass häufig in kurzer zeitlicher Abfolge ein Paar Barcodes unterschiedlichen Typs eingelesen wird und nach einer zeitlichen Pause wieder ein Paar Barcodes unterschiedlichen Typs in kurzer zeitlicher Abfolge.

Dabei sind die jeweils zuletzt eingelesenen Barcodes eines Paares von zeitlich aufeinanderfolgenden Paaren häufig identisch und die zuerst eingelesenen Barcodes unterscheiden sich. Gleichzeitig sind die zuerst eingelesenen Barcodes stets Barcodes aus einer Gruppe von nur fünf Barcodes.

Aufgrund dieses Musters kann das Analysemodul 54 erkennen, dass es sich bei den zuerst eingelesenen Barcodes um den Barcode eines der Regale R1-R4 oder der Packstation P handeln muss und bei den zuletzt eingelesenen Barcodes der Paare um einen Barcode der Ware. Somit kann der erste Typ der zuerst eingelesenen Barcodes den Regalen R1-R4 bzw. der Packstation P zugeordnet werden und der Typ der zuletzt eingelesenen Barcodes den Waren.

Dieser Zusammenhang wird als Kontextinformation I an das Korrelationsmodul 52 übermittelt.

Denkbar ist auch, dass das Analysemodul 54 mit den Ereignisdatenpaketen E das vom Sensor aufgenommen Bild erhält und mittels Bilderkennung ermittelt, ob sich der eingelesene Barcode auf einem Regal bzw. der Packstation oder einer Ware befindet.

Auch können mittels der Bilderkennung weitere Kontextinformationen I erzeugt werden, beispielsweise ob die Ware beschädigt ist, ob ein Transportbehälter voll ist und/oder ob das Regal leer ist.

Zum Beispiel berechnet das Analysemodul 54 auf Basis von Wahrscheinlichkeiten, dass der Barcode, der fest an der Packstation P oder einem der Regale R1 - R4 befestigt ist, die Bedeutung hat, dass eine Packstation bzw. Regale vorliegen. Die Barcodes müssen also nicht von einem Menschen vorher identifiziert und mit einer Bezeichnung (Label) versehen werden. Aufgrund der Beobachtung und des Vergleichs wiederkehrender Barcodes werden Wahrscheinlichkeiten über die Bedeutung des gerade vorliegenden Barcodes erzeugt. Diese Abhängigkeit der Paare an Barcodes kann als bedingte Wahrscheinlichkeit modelliert werden.

Das Korrelationsmodul 52 verknüpft die Ereignisdatenpakete E dann mit weiteren Kontextinformationen I, wie zuvor beschrieben, und übermittelt die so entstandenen Kontextdatensätze K an das Analysemodul 54.

Mittels der zuvor ermittelten Kontextinformationen I enthalten die Kontextdatensätze K nun die Information, ob sich die Ereignisdatenpakete den Regalen R1-R4 bzw. der Packstation oder der Waren zuzuordnen sind.

Das Analysemodul 54 ermittelt beispielsweise anhand der Kontextdatensätze K, die sich auf die Schritte zwischen zwei Arbeitsstationen 18 beziehen, den Abstand der Regale R1 - R4 jeweils untereinander und zur Packstation. In anderen Worten ermittelt das Analysemodul 54 den Aufbau des Arbeitssystems 14, ohne dass hierzu weitere Informationen notwendig wären.

Außerdem kann das Analysemodul 54 die häufigsten gegangenen Wege zwischen den Regalen R1 - R4 und/oder der Packstation P ermitteln.

Diese Informationen kann das Analysemodul 54 in einem Bericht B zusammenfassen, beispielsweise in Form einer Grafik, wie sie in Figur 6 dargestellt ist.

Diese zeigt die Anordnung der Regalen R1-R4 ausgehend von der Packstation P ausschließlich nach der Entfernung zur Packstation P sortiert. Außerdem sind die häufig gegangenen Wege mittels Pfeilen illustriert. Dieser Bericht B ähnelt somit einem sogenannten Spaghetti-Diagramm.

Zudem stellt das Analysemodul 54 beispielsweise fest, dass das Leitsystem 20 im vorgesehenen Prozess zunächst den Benutzer W stets als erstes anleitet, waren aus Regal R1, anschließend aus Regal R2, dann aus Regal R3 und schließlich aus Regal R4 zu sammeln, obwohl dies einen Umweg bedeutet, da Regal R4 auf dem Weg zwischen Regal R2 und Regal R3 liegt.

Das Analysemodul 54 kann somit als Systemverbesserung C feststellen, dass das Leitsystem 20 die Prozessschritte derart anpasst, dass die Regale in der Reihenfolge R1, R2, R4, R3 abgegangen werden, um Umwege zu vermeiden.

Diese Systemverbesserung C übermittelt das Analysemodul 54 an das Verteilungsmodul 56. Das Verteilungsmodul 56 übermittelt anschließend einen Änderungsbefehl O an das Leitsystem 20, der das Leitsystem 20 dementsprechend ansteuert.

Denkbar ist auch, dass die Verbindungsgeräte 22 die Reihenfolge der vom Benutzer W abzugehenden Regale R1, R2, R3, R4 aufgrund von allgemeineren Anweisungen aus dem Leitsystem 20 definiert.

In diesem Falle schickt das Verteilungsmodul 56 einen entsprechenden Änderungsbefehl O an die Verbindungsgeräte 22 der Benutzer W, die als Picker arbeiten, um die Reihenfolge zu ändern, in der die Regale abgegangen werden sollen.

Auf diese Weise verbessert das Überwachungssystem 16 das Arbeitssystem 14 direkt.

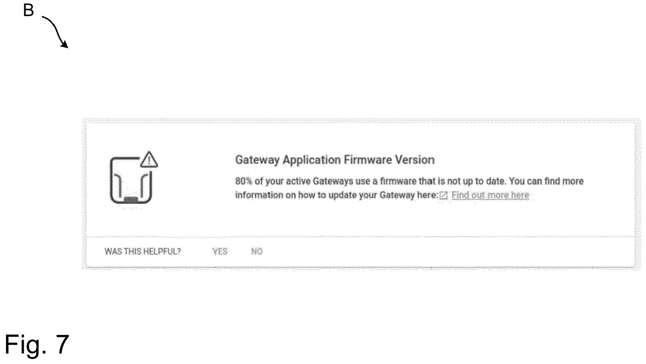

In Figur 7 ist ein weiteres Beispiel eines Berichts B dargestellt, wie er beispielsweise auf dem Bildschirm eines Smart Devices einer Aufsichtsperson angezeigt wird.

Dieser Bericht B ist textbasiert und erläutert dem Benutzer W, dass 66,67% der im Arbeitssystem 14 aktiven Sensorvorrichtungen 24 ("scanner") eine Firmware verwenden, die nicht aktuell ist und bietet über einen Link, dem die Aufsichtsperson folgen kann, weitere Informationen an.

Der Bericht B wurde anhand einer Berichtvorlage erstellt. Die Berichtvorlage kann einen oder mehrere der folgende Bedingungen, Angaben und Parameter enthalten: einen Identifikator, der die Berichtvorlage V identifiziert; Bedingungen, die erfüllt sein müssen, um einen Bericht B anhand dieser Berichtvorlage V zu erzeugen; einen erwarteten Referenzwert, der vom Analysemodul 54 ermittelt wurde, ob der Bericht B relevant sein wird; der aktuelle Wert zum Referenzwert; einen Vergleichsoperator, ob der aktuelle wert größer, gleich oder kleiner sein muss, um den Bericht B anhand dieser Berichtvorlage V zu erzeugen; eine Angabe der Präsentationsmethode des Berichts B; einen Identifikator der Präsentationsmethode; die Art der Präsentation (z.B. nur Text, Text mit Graphik, Text mit Tabelle, andere Details, etc.); Teile der Darstellung, z.B. Sätze in denen dann aktuelle Werte, z.B. aus Sensordaten, beim Erstellen eingesetzt werden; eine Angabe zur erwarteten Relevanz; Eine Angabe zu den Datenquellen der zu verwendenden Werte; einen Namen der Berichtsvorlage V; eine Regel, ob die verwendeten Werte einen positiven, neutralen oder negativen Trend beschreiben; einen Identifikator des einen Benutzers W oder mehrerer Benutzer W, der bzw. die den Bericht B erhalten sollen.

Die angezeigten Texte anderer Berichte können zum Beispiel lauten: "An dem Ort 'Regal 5' wird häufig ein Barcode gescannt, aber für diese Häufigkeit ist der Ort sehr weit entfernt. Sie sollten die Entfernung zu diesem Ort reduzieren" oder "Barcodes des Typs 'QR-Code' werden in Ihrem Arbeitssystem am schnellsten eingelesen. Verwenden Sie diesen Typ häufiger!".

Darüber hinaus wird im Beispiel der Figur 7 abgefragt, ob der Bericht B hilfreich war. Der Benutzer W kann nun "ja" oder "nein" antworten und somit Rückmeldung dazu geben, ob dieser Bericht B für ihn relevant war.

Anhand dieser Rückmeldung kann die Relevanz der Berichte B vom Analysemodul 54 besser abgeschätzt werden. Insbesondere passt sich das dritte Maschinenlernmodul M4 des Analysemoduls 54 basierend auf den Rückmeldungen stetig an. Auf diese Weise werden dem Benutzer W im Laufe der Zeit nur Berichte B angezeigt, die für ihn relevant sind und ihm nutzen.

## Patentansprüche

1. Verfahren zur Überwachung eines Arbeitssystems (14) mit einer Vielzahl von Sensorvorrichtungen (24) mit wenigstens einem Sensor (28) und einem Leitsystem (20), wobei das Verfahren die folgenden Schritte aufweist:
- Erzeugen von Sensordaten (D) sowie von Ereignisdatenpaketen (E) durch die Sensorvorrichtungen (24) während der Benutzung durch einen Benutzer (W),
- Übermitteln der Ereignisdatenpakete (E) an ein Korrelationsmodul (52) eines Überwachungssystems (16),
- Empfangen von Kontextinformation (I) durch das Korrelationsmodul (52),
- Korrelieren der Ereignisdatenpakete (E) mit den Kontextinformationen (I) durch das Korrelationsmodul (52) und Erzeugen von Kontextdatensätzen (K) durch das Korrelationsmodul (52), die auf den mit den Kontextinformationen (I) korrelierten Ereignisdatenpaketen (E) basieren,
- Übermitteln der Kontextdatensätze (K) an ein Analysemodul (54), und
- Erstellen eines Berichtes (B) über den Zustand des Arbeitssystems (14) und/oder über Abweichungen vom bisherigen Betriebsablauf des Arbeitssystems (14) und/oder mit einer Systemverbesserung (C) durch das Analysemodul (54) basierend auf den Kontextdatensätzen (K).

2. Verfahren nach Anspruch 1, **dadurch gekennzeichnet, dass** das Leitsystem (20) die Sensorvorrichtungen (24) zumindest teilweise zur Durchführung eines der jeweiligen Sensorvorrichtung (24) zugewiesenen Prozesses steuert, insbesondere wobei die zugewiesenen Prozesse für verschiedene Sensorvorrichtungen (24) unterschiedlich sein können, und/oder
dass der wenigstens eine Sensor (28) der Sensorvorrichtungen eine Kamera, ein Barcodeleser und/oder ein Beschleunigungssensor ist, und/oder dass die Sensorvorrichtung (24) wenigstens ein Betätigungselement (32), insbesondere einen Taster aufweist, und/oder
dass die Sensorvorrichtung (24) wenigstens ein Ausgabemittel (30) aufweist, insbesondere einen Bildschirm, eine oder mehrere LED und/oder einen Lautsprecher.

3. Verfahren nach einem der vorhergehenden Ansprüche, **dadurch gekennzeichnet, dass** das Arbeitssystem (14) eine Vielzahl von Verbindungsgeräten (22) aufweist, wobei jedes Verbindungsgerät (22) mit einem oder mehreren der Sensorvorrichtungen (24) über eine drahtlose Kommunikationsverbindung verbunden ist und mit dem Leitsystem (20) über eine kabelgebundene oder kabellose Kommunikationsverbindung verbunden ist oder auf dem gleichen Gerät ausgeführt wird, insbesondere wobei das Verbindungsgerät (22) die zugehörige Sensorvorrichtung (24) teilweise zur Durchführung eines der Sensorvorrichtung (24) zugewiesenen Prozesses steuert; und/oder
dass die Verbindungsgeräte (22) Teile des Korrelationsmoduls (52) sind; und/oder
dass die Verbindungsgeräte (22) Ereignisdatenpakete (E) erstellen und an das Korrelationsmodul (52) übermitteln, insbesondere wobei ein Ereignisdatenpaket (E) von einem der Verbindungsgeräte (22) erstellt wird, wenn ein Auslöseereignis vorliegt, insbesondere wobei das Auslöseereignis der Verbindungsaufbau einer Kommunikationsverbindung zwischen einer der Sensorvorrichtungen (24) und dem Verbindungsgerät (22), das Verbindungsende der Kommunikationsverbindung zwischen einer der Sensorvorrichtungen (24) und dem Verbindungsgerät (22), das Erkennen eines hochpriorisierten Ereignisses, und/oder das Über- und/oder Unterschreiten eines Grenzwerts ist.

4. Verfahren nach einem der vorhergehenden Ansprüche, **dadurch gekennzeichnet, dass** ein Ereignisdatenpaket (E) von der Sensorvorrichtung (24) in regelmäßigen Abständen erstellt wird und/oder dann erstellt wird, wenn ein Auslöseereignis vorliegt und eine Angabe zum Auslöseereignis umfasst, insbesondere wobei das Auslöseereignis ein Betätigen der Sensorvorrichtung (24) durch den Benutzer (W), der Ablauf einer vorbestimmten Zeit, der Füllstand einer Queue, der Verbindungsaufbau einer Kommunikationsverbindung zwischen der Sensorvorrichtung (24) und dem Verbindungsgerät (22), das Verbindungsende der Kommunikationsverbindung zwischen der Sensorvorrichtung (24) und dem Verbindungsgerät (22), das Erkennen eines hochpriorisierten Ereignisses, und/oder das Über- und/oder Unterschreiten eines Grenzwerts ist; und/oder
dass ein Ereignisdatenpaket (E) aktuelle Sensordaten (D) wenigstens eines Sensors (28) der Sensorvorrichtung (24) sowie wenigstens eine Situationsangaben (A) der Sensorvorrichtung (24) umfasst, insbesondere wobei die aktuellen Sensordaten (D) die Anzahl zwischen zwei Ereignispunkten getätigten Schritten, die Art der Aktivität zwischen zwei Ereignispunkten, der Bewegungsaufwand zwischen zwei Ereignispunkten, die Dauer zwischen zwei Ereignispunkten, Gesten und/oder einen Messwert eines Sensors (28) der Sensorvorrichtung (24), insbesondere der Wert und/oder das Bild eines erfassten Barcodes und/oder ein Bild einer Kamera, umfassen, und/oder die Situationsangabe (A) eine Angabe des Prozessschritts, insbesondere einen Identifikator des Prozessschritts, einen Identifikator der jeweiligen Sensorvorrichtung (24), einen Identifikator des jeweiligen Verbindungsgeräts (22), einen Zeitstempel, den aktuellen Ort, den Ladezustand des Akkumulators oder der Batterie der Sensorvorrichtung (24), Angaben über die Verbindungsqualität zwischen der Sensorvorrichtung (24) und dem Verbindungsgerät (22), Informationen über die Sensorvorrichtung, Informationen über das Verbindungsgerät (22), die relative Position der Sensorvorrichtung (24) zum Verbindungsgerät (22), der Abstand zwischen der Sensorvorrichtung (24) und dem Verbindungsgerät (22), eine Angabe dazu, ob das Verbindungsgerät (22) mobil oder stationär ist, und/oder einen Identifikator der Konfiguration der Sensorvorrichtung (24) umfasst,
insbesondere wobei die Ereignisdatenpakete (E), insbesondere die Informationen in den Ereignisdatenpaketen (E), mit den Kontextinformationen (I) mittels eines Maschinenlernmoduls (M1) des Korrelationsmoduls (52) korreliert werden, und/oder anhand des Zeitstempels, dem Identifikator der jeweiligen Sensorvorrichtung (24), dem Identifikator des jeweiligen Verbindungsgeräts (22), einem Identifikator des Benutzers (W), einem Identifikator des Prozessschritts und/oder der Angabe, die das Ereignisdatenpaket (E) einem Ereignis, einer Tätigkeit, einem Ort und/oder einem Gegenstand zuordnet, korreliert werden.

5. Verfahren nach einem der vorhergehenden Ansprüche, **dadurch gekennzeichnet, dass** der Bericht (B) als Zustand des Arbeitssystems (14) Angaben enthält über den Aufbau des Arbeitssystems (14), insbesondere von stationären Arbeitsstationen (18) des Arbeitssystems (14); die Auslastung des Arbeitssystems (14), insbesondere der Sensorvorrichtungen (24); den Zustand der Sensorvorrichtungen (24), Gateways (50) und/oder Verbindungsgeräten (22); den wenigstens einen mit dem Arbeitssystem (14) durchgeführten Prozess, insbesondere einzelne Prozessschritte des Prozesses, der Reihenfolge einzelner Prozessschritte des Prozesses, der Länge einzelner Prozessschritte des Prozesses, den Prozessbeginn und/oder das Prozessende; die Entladungsgeschwindigkeit des Akkumulators oder der Batterie der Sensorvorrichtungen (24); die Akku- oder Batterielebenszeit; die Art der eingelesenen Barcodes; die Dauer eines Einlesevorgangs; der Erfolg eines Einlesevorgangs; die Anzahl an Schritten zwischen zwei Einlesevorgängen; die Veränderung des Ortes zwischen zwei Einlesevorgängen; die Softwareversion der Sensorvorrichtungen (24); die Softwareversion von Verbindungsgeräten (22) und/oder Informationen zum Ladeverhalten der Sensorvorrichtung (24); und/oder
dass der Bericht (B) als Abweichungen vom vorherigen Betriebsablauf Angaben enthält von Sensorvorrichtungen (24) mit weniger oder mehr ausgeführten Prozessschritten als im vorherigen Betriebsablauf; Änderungen im Aufbau des Arbeitssystems (14), insbesondere von stationären Arbeitsstationen (18) des Arbeitssystems (14); Änderungen der Auslastung des Arbeitssystems (14), insbesondere der Sensorvorrichtungen (24); Änderungen des Zustands des Arbeitssystems (14), insbesondere der Sensorvorrichtungen (24); Änderungen des wenigstens einen mit dem Arbeitssystem (14) durchgeführten Prozesses, insbesondere einzelner Prozessschritte des Prozesses, der Reihenfolge einzelner Prozessschritte, der Länge einzelner Prozessschritte, des Prozessbeginns und/oder des Prozessendes; Unterschiede zwischen den gleichen Prozessen an unterschiedlichen Orten und/oder Arbeitsstationen (18); und/oder Unterschiede zu Industriereferenzwerten; und/oder
dass die Kontextdatensätze (K) und/oder Ereignisdatenpakete (E) in einem Datenspeicher (57) abgelegt werden, um zu einem späteren Zeitpunkt als Kontextdatensätze (K) der Vergangenheit und/oder Ereignisdatenpakete (E) der Vergangenheit verwendet zu werden, insbesondere wobei der Bericht (B) auf Grundlage der aktuellen von dem Korrelationsmodul (52) erzeugten Kontextdatensätzen (K) und im Datenspeicher (57) abgelegten Kontextdatensätzen (K) der Vergangenheit erstellt wird.

6. Verfahren nach einem der vorhergehenden Ansprüche, **dadurch gekennzeichnet, dass** das Korrelationsmodul (52) Kontextinformation (I) von dem Leitsystem (20), einem Warenwirtschaftssystem, einem Enterprise Resource Planning System, einer Maschinensteuerung (62) für eine Maschine (60) des Arbeitssystems (14), einem Mobile-Device-Management-System, Daten von externen Datenanbietern und/oder öffentlich abrufbaren Datenquellen erhält; und/oder
dass die Kontextinformationen (I) Informationen zur Arbeitsumgebung, Prozessen des Arbeitssystems (14), den Benutzern (W) des Arbeitssystems (14) und/oder zur Auslastung des Arbeitssystems (14) umfassen, insbesondere die Temperatur der Arbeitsumgebung, Angaben über die gewöhnliche Arbeitsauslastung an einem Arbeitstag, die erwartete Auslastung, die Abhängigkeiten von Tätigkeiten untereinander, und/oder der Zustand der öffentlichen Gesundheit in der Region des Arbeitssystems (14); und/oder
dass der Bericht (B) an das Leitsystem (20), ein Warenwirtschaftssystem, ein Enterprise Resource Planning System, ein mobiles Endgerät, einen Arbeitsplatzcomputer und/oder eine Ausgabevorrichtung übermittelt wird, insbesondere wobei die Ausgabevorrichtung dazu eingerichtet ist, den Bericht auszugeben.

7. Verfahren nach einem der vorhergehenden Ansprüche, **dadurch gekennzeichnet, dass** das Analysemodul (54) die Ereignisdatenpakete (E) erhält sowie basierend auf den Ereignisdatenpaketen (E) und/oder Ereignisdatenpaketen (E) der Vergangenheit Kontextinformationen (I) für Ereignisdatenpakete (E) erstellt und an das Korrelationsmodul (52) übermittelt, insbesondere wobei das Analysemodul (54) ein Kontextmaschinenlernmodul (MK) aufweist, das basierend auf den Ereignisdatenpaketen (E) und/oder Ereignisdatenpaketen (E) der Vergangenheit die Kontextinformationen (I) für Ereignisdatenpakete (E) erstellt, insbesondere
wobei das Analysemodul (54) als Kontextinformation (I) zu einem Ereignisdatenpaket (E) eine Angabe ermittelt, die das Ereignisdatenpaket (E) einem Ereignis, einer Tätigkeit, einem Ort und/oder einem Gegenstand zuordnet, insbesondere wobei die Angabe eine Wahrscheinlichkeit enthält, dass das Ereignisdatenpaket (E) dem Ereignis, der Tätigkeit, dem Ort und/oder dem Gegenstand zuzuordnen ist.

8. Verfahren nach einem der vorhergehenden Ansprüche, **dadurch gekennzeichnet, dass** das Analysemodul (54) basierend auf den Kontextdatensätzen (K), insbesondere aktuellen Kontextdatensätzen (K) und Kontextdatensätzen (K) der Vergangenheit, und/oder dem Bericht (B) wenigstens eine Systemverbesserung (C) ermittelt, insbesondere wobei die Systemverbesserung (C) an das Leitsystem (20), ein Warenwirtschaftssystem, ein Enterprise Resource Planning System, ein mobiles Endgerät und/oder eine Ausgabevorrichtung übermittelt wird.

9. Verfahren nach einem der vorhergehenden Ansprüche, **dadurch gekennzeichnet, dass** zur Erstellung des Berichtes (B) die folgenden Schritte durchgeführt werden:
- Ermitteln des Zustands des Arbeitssystems (14), des bisherigen Betriebsablaufes und/oder Abweichungen vom bisherigen Betriebsablauf auf Grundlage der Kontextdatensätze (K), und
- Erstellen des Berichtes (B) anhand des Zustands des Arbeitssystems (14), des bisherigen Betriebsablaufes und/oder Abweichungen vom bisherigen Betriebsablauf, insbesondere
wobei zur Ermittlung des Zustands des Arbeitssystems (14), des bisherigen Betriebsablaufes und/oder Abweichungen vom bisherigen Betriebsablauf ein erstes Maschinenlernmodul (M2) des Analysemoduls (54) verwendet wird, insbesondere wobei das erste Maschinenlernmodul (M2) ein künstliches neuronales Netzwerk, einen Decision Tree, einen statistischen Algorithmus, einen Clusteralgorithmus, ein Modul zur Textgenerierung und/oder eine Principal Component Analysis aufweist.

10. Verfahren nach Anspruch 9, **dadurch gekennzeichnet, dass** zur Erstellung des Berichtes (B) eine Berichtvorlage (V) verwendet wird, insbesondere wobei die Berichtvorlage (V) Anweisungen für das Analysemodul (54) enthält, um anhand der Kontextdaten (K) den der Berichtvorlage (V) zugeordneten Bericht (B) zu erzeugen; bevorzugt
dass die Berichtvorlage (V) die für den Bericht (B) benötigten Eingangsdaten angibt und/oder wenigstens einen Auswerteschritt zur Ermittlung des Zustands des Arbeitssystems (14), des bisherigen Betriebsablaufes und/oder von Abweichungen vom bisherigen Betriebsablauf angibt sowie optional Systemverbesserungen (C) aufgrund der Ergebnisse des wenigstens einen Auswerteschritts definiert, besonders bevorzugt
dass die Berichtvorlage (V) wenigstens eine Signifikanzbedingung definiert, wobei das Analysemodul (54) anhand der Kontextdatensätze (K) prüft, ob die wenigstens eine Signifikanzbedingung erfüllt ist, wobei der Bericht (B) anhand der jeweiligen Berichtvorlage (V) nur erzeugt wird, wenn die Signifikanzbedingung erfüllt ist.

11. Verfahren nach Anspruch 10, **dadurch gekennzeichnet, dass** das Analysemodul (54) eine Berichtvorlage (V) auswählt oder generiert, und anhand der Berichtvorlage (V) und den Kontextdatensätzen (K) den Bericht (B) erstellt; und/oder
dass das Analysemodul (54) mehrere Berichtvorlagen (V) auswählt oder generiert, für jede Berichtvorlage (V) den Bericht (B) erstellt und die Relevanz der Berichte (B) bewertet, wobei nur derjenige Bericht (B) der erstellten Berichte (B) weiterverwendet wird, der die höchste Relevanz hat, oder nur eine vorbestimmte Anzahl an den Berichten (B) der erstellten Berichte (B) weiterverwendet werden, die die höchste Relevanz haben, insbesondere wobei das Analysemodul (54) ein drittes Maschinenlernmodul (M4) aufweist, dass die Relevanz der Berichte (B) bewertet, insbesondere anhand von Rückmeldungen des Benutzers (W), einer Aufsichtsperson und/oder Benutzer anderer Arbeitssysteme.

12. Verfahren nach einem der vorhergehenden Ansprüche, **dadurch gekennzeichnet, dass** die Berichtvorlage (V) wenigstens eine Vorgabe zur Wiedergabe des Berichts (B) machen, insbesondere bezüglich des Gerätes auf dem der Bericht (B) anzuzeigen ist und/oder der Darstellungsweise des Berichtes (B).

13. Verfahren nach einem der vorhergehenden Ansprüche, **dadurch gekennzeichnet, dass** die Systemverbesserung (C) an ein Verteilungsmodul (56) übermittelt wird, wobei das Verteilungsmodul (56) basierend auf der Systemverbesserung (C) wenigstens einen Änderungsbefehl (O) für wenigstens eine der Sensorvorrichtungen (24) erstellt und den Änderungsbefehl (O) an die jeweilige Sensorvorrichtung (24), das der jeweiligen Sensorvorrichtung (24) zugehörige Verbindungsgerät (22) und/oder das Leitsystem (20) übermittelt, insbesondere wobei die Sensorvorrichtung (24) eine Handlungsanweisung an den Benutzer (W) auf Grundlage des Änderungsbefehls (O) ausgibt; und/oder
dass das Leitsystem (20) und/oder das zugehörige Verbindungsgerät (22) basierend auf der Systemverbesserung (C) den der jeweiligen Sensorvorrichtung (24) zugewiesenen Prozess verändert und/oder die Sensorvorrichtung (24) anweist, eine Handlungsanweisung auszugeben.

14. Verfahren nach einem der vorhergehenden Ansprüche, **dadurch gekennzeichnet, dass** das Maschinenlernmodul (M1) des Korrelationsmoduls (52), das erste Maschinenlernmodul (M2) des Analysemoduls (54), ein zweites Maschinenlernmodul (M3) des Analysemoduls (54), das dritte Maschinenlernmodul (M4) des Analysemoduls (54), ein viertes Maschinenlernmodul (M5) des Analysemoduls (54), das Kontextmaschinenlernmodul (MK) des Analysemoduls (54) und/oder ein Maschinenlernmodul (M6) des Verteilungsmodules (56) ein künstliches neuronales Netzwerk, einen Decision Tree, einen statistischen Algorithmus, einen Clusteralgorithmus, ein Modul zur Textgenerierung und/oder eine Principal Component Analysis ist oder umfasst.

15. System mit einem Arbeitssystem (14) und einem Überwachungssystem (16), wobei das System (12) dazu eingerichtet ist, ein Verfahren nach einem der vorhergehenden Ansprüche durchzuführen.
